(19) Europäisches Patentamt
European Patent Office
Office européen des brevets

(11) EP 4 331 780 A1

(12) EUROPEAN PATENT APPLICATION

(43) Date of publication:
**06.03.2024 Bulletin 2024/10**

(21) Application number: **23188373.7**

(22) Date of filing: **28.07.2023**

(51) International Patent Classification (IPC):
***B25J 9/16*** *(2006.01)*

(52) Cooperative Patent Classification (CPC):
**B25J 9/1666;** G05B 2219/40107; G05B 2219/40108; G05B 2219/40121; G05B 2219/40476; G05B 2219/40478

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 JP 2022138314**

(71) Applicant: **OMRON Corporation**
**Kyoto 600-8530 (JP)**

(72) Inventor: **OSHIRO, Atsushi**
**600-8530 Kyoto-shi (JP)**

(74) Representative: **Mewburn Ellis LLP**
**Aurora Building**
**Counterslip**
**Bristol BS1 6BX (GB)**

# (54) APPARATUS, METHOD, AND PROGRAM FOR GENERATING OPERATION PATH OF ROBOT

(57) A method is provided that includes: receiving designation of one or more operation sections; generating a plurality of path candidates (40a-40f) of a robot (200) for a target operation section of the one or more operation sections; displaying the plurality of path candidates (40a-40f) on a user interface (504); receiving a selection of one of the plurality of path candidates (40a-40f); and deciding the selected path candidate as the operation path of the target operation section.

FIG.1

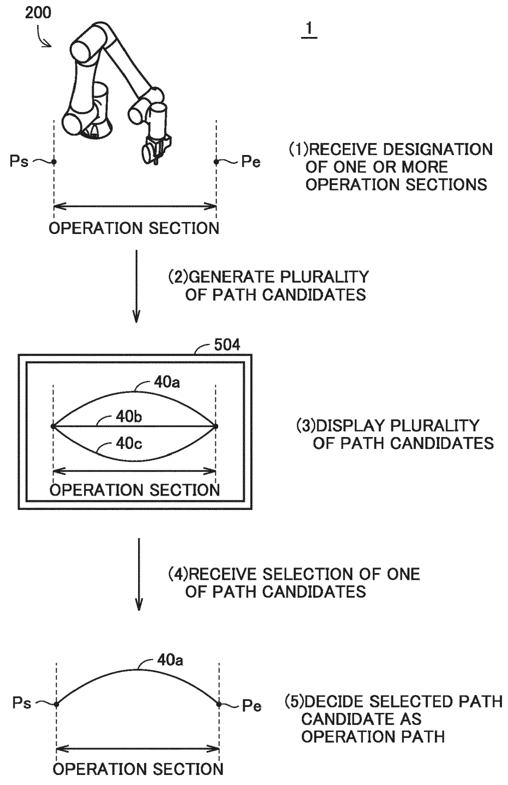


EP 4 331 780 A1

**Description**

CROSS REFERENCE TO RELATED APPLICATIONS

This nonprovisional application is based on Japanese Patent Application No. 2022-138314 filed on August 31, 2022, with the Japan Patent Office, the entire contents of which are hereby incorporated by reference.

BACKGROUND OF THE INVENTION

Field of the Invention

This disclosure relates to an apparatus, a method, and a program for generating operation paths of robots.

Description of the Background Art

Certain technical fields including the FA (Factory Automation) technologies have been and are actively involved in developing robots that operate in cooperation with human. Conventionally, an operation path(s) of a robot may be defined and set before the robot starts to operate. It is described in the literature titled as "Mohammad Safeea, et.al. (two other authors), "On-line collision avoidance for collaborative robot manipulators by adjusting off-line generated paths: An industrial use case", Robotics and Autonomous Systems, Elsevier, 2019, 119, pp. 278-288", that a user teaches all of the points on the path and thereby sets the robot's operation path.

SUMMARY OF THE INVENTION

Having to teach beforehand all of the points on the robot's path, however, may be a tiring and time-consuming labor for users. A known technique automatically generates a path(s) to be travelled by a robot currently in motion in a manner that any collision is avoidable between the robot and other objects nearby (refer to "Justinas Miseikis, et.al (three other authors), "Multi 3D camera mapping for predictive and reflexive robot manipulator trajectory estimation, 2016 IEEE Symposium Series on Computational Intelligence (SSCI)"). Thus, the robot's path(s) may desirably be generated automatically during the operation of the robot without having to teach all of the points on the path before the operation of the robot starts. In this instance, however, people near or around the robot may find it difficult to predict motions and/or actions of the robot.

To address such issues of the known art, this disclosure is directed to providing an apparatus, a method and a program that can alleviate a user's labor required for path setting before a robot starts to operate and also help the user to predict motions and/or actions of the robot.

According to an example of the disclosure, an apparatus that generates an operation path of a robot before the robot starts to operate includes a generating unit and a deciding unit. The generating unit generates a plurality of path candidates of the robot for a target operation section of one or more operation sections designated and provides data for display of a screen on which a selection of one of the plurality of path candidates is to be received. The deciding unit decides the selected one of the plurality of path candidates as the operation path of the target operation section.

According to the disclosure, a user, by thus selecting, on the screen, one of the plurality of path candidates automatically generated for the target operation section, may be allowed to set the operation path of the target operation section. This may be rephrased that a user needs not teach all of the points on the target operation section. This may reduce a user's labor required for path setting before the robot starts to operate. Further advantageously, a user selects one of plurality of path candidates as the operation path, which helps the user to predict motions and/or actions of the robot before the robot starts to operate.

In the disclosure, the generating unit generates the plurality of path candidates in a manner that any collision with an object is avoidable using a region-of-occupancy information indicating a region occupied by the object in a space where the robot is located. According to the disclosure, the path candidates may be generated without any possible risk of collision with the object.

In the disclosure, the generating unit may, for example, generate the plurality of path candidates using a probabilistic method.

In the disclosure, the generating unit evaluates each of the plurality of path candidates. The screen includes an evaluation result of each of the plurality of path candidates. The evaluation result presents, for example, at least one of moving distance, moving time, and degree of risk of collision with the object for each of the plurality of path candidates.

According to the disclosure, a user, by consulting the evaluation results, may easily select one of the plurality of path candidates.

In the disclosure, the one or more operation sections include first to Nth operation sections. The N is an integer greater than or equal to 2. The apparatus further includes a setting unit configured to set which one of a first group and a second group the first to the Nth operation sections each fall under. The setting unit sets one or more of the first to the Nth operation sections that fall under the first group as the target operation section. The deciding unit decides the operation path of the robot for one or more of the first to the Nth operation sections that fall under the second group based on teaching data designated. The deciding unit decides a path obtained by connecting the operation paths decided for the first to the Nth operation sections as an entire path from the start point of the first operation section to the ending point of the Nth operation section. According to the disclosure, a user may be allowed to set the operation path for each of the operation sections.

In the disclosure, the apparatus further includes a controller configured to operate the robot along the entire path. The setting unit further sets which one of a third group and a fourth group the first to the Nth operation sections each fall under. The controller is operable to control the robot so as to perform a collision-avoidable operation that allows the robot to avoid any collision with an object around the robot. The controller activates the collision-avoidable operation when the robot is in motion along the operation path corresponding to one or more of the first to the Nth operation sections that fall under the third group. The controller disables the collision-avoidable operation when the robot is in motion along the operation path corresponding to one or more of the first to the Nth operation sections that fall under the fourth group.

According to the disclosure, a user may be able to select and set the fourth group for an operation section that involves any work that requires precision (for example, insertion or pressing of a tool or something against a certain object). This may prevent accidental start of the collision-avoidable operation during such precisionrequired work carried out by the robot.

In the disclosure, the collision-avoidable operation includes an operation that allows the robot to move away from a dynamic object. The controller evaluates a risk of collision between the robot in motion and a static object around the robot. The controller stops the robot in response to the risk being greater than a predefined reference.

According to the disclosure, the robot, while receding from the dynamic object, may happen to approach a static object(s) nearby, however, collision between the robot and the static object may be successfully prevented.

According to an example of the present disclosure, a method for generating an operation path of a robot before the robot starts to operate includes the following first to fifth steps. The first step is a step of receiving designation of one or more operation sections. The second step is a step of generating a plurality of path candidates of the robot for a target operation section of the one or more operation sections. The third step is a step of displaying the plurality of path candidates on a user interface. The fourth step is a step of receiving a selection of one of the plurality of path candidates. The fifth step is a step of deciding the selected one of the plurality of path candidates as the operation path of the target operation section.

According to an example of the present disclosure, a program prompts a computer to execute a method for generating an operation path of a robot before the robot starts to operate. The method includes: receiving designation of one or more operation sections; generating a plurality of path candidates of the robot for a target operation section of the one or more operation sections; providing data for display of a screen on which a selection of one of the plurality of path candidates is to be received; and deciding the selected one of the plurality of path candidates as the operation path of the target operation section.

These method and program of the disclosure may alleviate a user's labor required for path setting before the robot starts to operate and help the user to predict motions and/or actions of the robot.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a drawing that schematically illustrates a method for generating a robot's operation path in a system according to an embodiment.

Fig. 2 is a drawing that illustrates a specific example of the system according to the embodiment.

Fig. 3 is a block diagram that schematically illustrates hardware elements of a control device and of a terminal.

Fig. 4 is a block diagram that illustrates exemplified functional elements of a computation circuitry.

Fig. 5 is a drawing that illustrates an exemplified OctoMap.

Fig. 6 is a diagram that illustrates exemplified plurality of path candidates generated using a RRT algorithm.

Fig. 7 is a diagram that illustrates an exemplified setting screen used to set an operation section.

Fig. 8 is a diagram that illustrates an exemplified selection screen on which a user is prompted to select one of a plurality of path candidates.

Fig. 9 is a flow chart that illustrates a processing flow of a control device in an offline period.
Fig. 10 is a flow chart that illustrates a subroutine processing flow in step S3 of Fig. 9.
Fig. 11 is a flow chart that illustrates a processing flow of the control device in an online period.
Fig. 12 is an exemplified setting screen used when a broad range is set as an initial operation section.
Fig. 13 is an exemplified setting screen used when an initial operation section is split into a plurality of operation sections.
Fig. 14 is a diagram that illustrates a dilation process.
Fig. 15 is a diagram of a selection screen according to a modified example 6.

DESCRIPTION OF THE PREFERRED EMBODIMENTS

An embodiment of the invention is hereinafter described in detail referring to the accompanying drawings. The same or similar components and units in the drawings are simply illustrated with the same reference signs, redundant description of which will basically be omitted. Modified examples hereinafter described may be suitably selected and combined.

§ 1 Example of application

Fig. 1 is a drawing that schematically illustrates a method for generating a robot's operation path in a system according to an embodiment. As illustrated in Fig. 1, a system 1 includes a user interface 504 and a robot 200. System 1 may be installed and operated in a production site, examples of which may include plants and factories. System 1 may be particularly suitable for production site where human and robot 200 work in collaboration with each other.

Examples of robot 200 may include multi-jointed robots, drone, and autonomous robots like robots autonomously driven to travel.

As illustrated in Fig. 1, a method executed in system 1 includes the following steps 1) to 5). Steps 1) to 5) are carried out before robot 200 starts to operate (hereinafter, referred to as "offline period").

Step 1) is a step of receiving designation of one or more operation sections of robot 200. The operation section(s) is designated through user interface 504. A user may only be required to designate a start point Ps and an ending point Pe of each operation section.

Step 2) is a step of generating a plurality of path candidates of robot 200 for a target operation section of one or more operation sections. The plurality of path candidates are generated using a known art, each being a path that connects start point Ps and ending point Pe of the target operation section.

Step 3) is a step of displaying the plurality of path candidates on user interface 504. In the example of Fig. 1, path candidates 40a to 40c are displayed on user interface 504.

Step 4) is a step of receiving a selection of one of the plurality of path candidates. The path candidate is selected through user interface 504.

Step 5) is a step of deciding the path candidate selected earlier as the operation path of the target operation section. In the example of Fig. 1, the operation path decided in this step is path candidate 40a.

According to this embodiment, a user, by selecting one of the plurality of path candidates automatically generated for the target operation section, may be allowed to set the operation path of robot 200 for the target operation section. This may be rephrased that a user needs not teach all of the points on the target operation section. This may reduce a user's labor required for path setting before the robot starts to operate.

Further advantageously, a user selects one of the plurality of path candidates as the operation path, which allows the user to easily predict motions of the robot before the robot starts to operate.

§2 Specific Examples

<Specific examples of the system>

A system including a multi-jointed robot is hereinafter described as an example of robot 200. Robot 200 may be a multi-jointed robot as described above or may be a robot of any other type.

Fig. 2 is a drawing that illustrates a specific example of the system according to the embodiment. System 1 illustrated in Fig. 2 includes a control device 100, robot 200, a plurality of sensing devices 300, and a terminal 500.

Control device 100 includes the following features; generating the operation path of robot 200, and controlling the operation of robot 200. Control device 100 is connected to sensing devices 300 so as to communicate with these sensing devices. Control device 100 communicates with sensing devices 300 using, for example, GigE Vision (registered trademark) or USB (Universal Serial Bus).

Sensing devices 300 are disposed in a space where robot 200 is present to detect the position of any object in this space. Examples of the object may include robot 200, a static object(s) (for example, desk, wall) around robot 200, and a dynamic object(s) (for example, human) allowed to move around robot 200. Examples of sensing device 300 may include RGB-D cameras and laser range finders. Sensing devices 300 each generate point group data of a field of vision. Preferably, four or more sensing devices 300, for example, may be disposed at different positions so that there is no dead angle in a target space.

Robot 200 includes a manipulator 202 and a manipulator controller 204.

Manipulator 202 has an arm 220 with six joints 20_1 to 20_6. An end effector 230 is attached to a front end of arm 220. The center at the front end of arm 220 is referred to as tool center point (TCP).

During a period in which robot 200 is driven to operate (hereinafter, referred to as "online period"), manipulator controller 204 controls the operation of manipulator 202 in accordance with a command(s) outputted by control device 100.

Examples of terminal 500 may include desktop computers, laptop computers, smartphones or tablets. Terminal 500 is allowed to communicate with control device 100. Terminal 500 receives information provided by control device 100 and displays the received information. Terminal 500 also receives a user's instruction(s) and transmits the received instruction(s) to control device 100.

<Hardware configuration of the control device >

Fig. 3 is a block diagram that schematically illustrates hardware elements of a control device and of a terminal. Control device 100 is typically so structured that conforms to a general-purpose computational architecture.

As illustrated in Fig. 3, control device 100 includes a computation circuitry 120 and a field network controller 130.

Computation circuitry 120 executes computing processes required to generate the operation path of robot 200 and to control the operation of robot 200. For instance, computation circuitry 120 includes a processor 121, a main memory 122, a storage 123, and an interface circuit 124.

Structural elements of processor 121 include a CPU (Central Processing Unit) and an MPU (Micro Processing Unit). Processor 121 executes computing processes required to generate the operation path of robot 200 and to control the operation of robot 200. Main memory 122 may include a volatile storage device, for example, DRAM (Dynamic Random Access Memory) or SRAM (Static Random Access Memory). Storage 123 may include a non-volatile storage device, for example, HDD (Hard Disk Drive) or SSD (Solid State Drive). Interface circuit 124 transmits and receives data to and from robot 200.

Storage 123 stores a system program 140 relevant to the operation control of robot 200 and generation of the operation path robot 200. System program 140 includes a command that prompts a computing process for generating the operation path of robot 200, a command associated with the operation control of robot 200 and a command associated with an interface to and from robot 200. System program 140 further includes a service program that provides webpages.

Storage 123 further stores shape data 141, path data 142, and static object data 143. Shape data 141 represents the shape of robot 200 and is used to generate a screen on which a robot model is displayable. Path data 142 represents the generated operation path. This data is generated by having processor 121 run system program 140. Path data 142 represents the sequence of a plurality of points that the robot passes on its operation path and the position and attitude to be taken by manipulator 202 at these points. Static object data 143 represents the position of any static object around robot 200. This data is generated by having processor 121 run system program 140.

Field network controller 130 mostly transmits and receives data to and from sensing devices 300 through a field network.

Terminal 500 is typically so structured that conforms to a general-purpose computational architecture. As illustrated in Fig. 3, terminal 500 includes a processor 501, a main memory 502, a storage 503, and a user interface 504.

Processor 501 includes, for example, CPU and/or MPU and executes various information processes. Main memory 502 includes a volatile storage device(s), for example, DRAM or SRAM. Storage 503 includes a non-volatile storage device(s), for example, HDD and/or SSD. In storage 503 is storable a browser 530 for display of a webpage(s) provided by a web server.

User interface 504 includes a display and an input unit. Examples of the display may include liquid crystal display or organic EL (Electro Luminescence) display. Examples of the input unit may include keyboard, mouse, and touchpad.

<Functional elements of the computation circuitry>

Fig. 4 is a block diagram that illustrates exemplified functional elements of a computation circuitry. As illustrated in Fig. 4, computation circuitry 120 includes an OctoMap obtaining unit 10, a calibration unit 11, an operation section setting unit 12, a generating unit 13, a deciding unit 14, and a controller 15. OctoMap obtaining unit 10, calibration unit 11, operation section setting unit 12, generating unit 13, deciding unit 14 and controller 15 are implemented by having processor 121 illustrated in Fig. 3 run system program 140.

Calibration unit 11, operation section setting unit 12, generating unit 13 and deciding unit 14 execute the following processes in the offline period in which robot 200 is inactive. Controller 15 executes the following processes in the online period in which robot 200 is activated and run. OctoMap obtaining unit 10 executes the following processes in both of the online period and the offline period.

The online period and the offline period are repeated alternately. An operation path is decided in the offline period, and robot 200 is then operated along the operation path in the online period. In case the operation path needs to be reviewed later for a certain reason, another operation path is decided in the next offline period. Robot 200 is then operated along this newly decided operation path in the next online period.

(OctoMap obtaining unit)

OctoMap obtaining unit 10 obtains an OctoMap at regular intervals in both of the online period and the offline period. The OctoMap refers to a region-of-occupancy information indicating a region occupied by an object in a space where robot 200 is located.

Specifically, OctoMap obtaining unit 10 obtains pieces of point group data from sensing devices 300. The point group data obtained from each sensing device 300 is expressed using a coordinate system of the relevant sensing device 300 (hereinafter, referred to as "camera coordinate system"). OctoMap obtaining unit 10 converts the point group data obtained from each sensing device 300 into a coordinate system of robot 200 (hereinafter, referred to as "robot coordinate system"). The conversion matrix for conversion from the camera coordinate system into the robot coordinate system is drawn up by calibration performed in advance for each sensing device 300. Using all of the obtained pieces of point group data may impose a heavy computing load. Therefore, OctoMap obtaining unit 10 generates an OctoMap from the point group data.

Fig. 5 is a drawing that illustrates an exemplified OctoMap. As illustrated in Fig. 5, an OctoMap 50 represents the occupancy of an object in each one of cuboidal voxels 51 obtained by splitting a space into segments. The object may include robot 200 and a static object(s) and a dynamic object(s) around robot 200. OctoMap obtaining unit 10 adopts voxels 51 into the point group data and calculates an occupancy in each voxel 51. The occupancy is expressed with, for example, a value in the range of 0.00 to 100. As a method for generating OctoMap 50 using the point group data may be employed the technology described in "Multi 3D camera mapping for predictive and reflexive robot manipulator trajectory estimation, Justinas Miseikis, et.al (three other authors), with three others, 2016 IEEE Symposium Series on Computational Intelligence (SSCI)". Thus, OctoMap obtaining unit 10 obtains OctoMap 50 for each cycle.

(Calibration unit)

Based on OctoMap 50 obtained in a calibration period which is part of the offline period, calibration unit 11 identifies a group of voxels that satisfy the following conditions "a" to "c" as a group of voxels occupied by a static object around robot 200;

condition "a": occupancy is greater than or equal to a predefined threshold.
condition "b": changes of occupancy with time is less than a reference value in the calibration period.
condition "c": a predefined number of voxels or more that satisfy the conditions "a" and "b" are coupled to one another.

The calibration period is defined and set beforehand as a period in which no dynamic object is around robot 200.

Calibration unit 11 generates data of positions of the identified group of voxels as static object data 143, and then stores the generated static object data 143 in storage 123.

(operation section setting unit)

In the offline period, operation section setting unit 12 sets one or more operation sections in response to the receipt of an instruction from terminal 500. Specifically, operation section setting unit 12 transmits, to terminal 500, screen data for display of a setting screen on which one or more operation sections are settable. This setting screen is provided as a webpage. The screen data is HTML (HyperText Markup Language) data, which is processed by browser 530 of terminal 500. Then, the setting screen is displayed on user interface 504 of terminal 500. The setting screen is allowed to receive designation of one or more operation sections. Operation section setting unit 12 sets one or more operation sections in accordance with the designation received by the setting screen.

The operation sections are each defined based on the start point, ending point and range of possible positions of the tool center point (hereinafter, referred to as "movable range"). The start point and the ending point are expressed using XYZ coordinates that define the position of the tool center point of robot 200 and Euler angles (Rx, Ry, Rz) that define the attitude of the tool center point. The Euler angles refer to rotation angles centered on XYZ axes relative to a predefined reference attitude.

Supposing that a plurality of operation sections are set (first to Nth operation sections: N is an integer greater than or equal to 2), the ending point of the kth operation section (k is an integer between 1 and N-1) is practically the start point of the (k+1)th operation section.

Operation section setting unit 12 transmits, to terminal 500, screen data for display of a screen (webpage) that prompts a user to designate which one of "Selectable" group and "By Teaching" group one or more operation sections each fall under. This screen data is HTML data which is processed by browser 530 of terminal 500. Then, terminal 500 displays this screen to receive the designation of one or more operation sections. As described later, a plurality of path candidates are automatically generated for the operation section(s) that falls under "Selectable" group. Then, a user is prompted to input teaching data that defines the robot's operation in each operation section that falls under "By Teaching" group. Thus, the user may designate which one of the groups one or more operation sections each fall under in view of labor required for the operation path setting.

Operation section setting unit 12 transmits, to terminal 500, screen data for display of a screen (webpage) that prompts a user to designate and input which one of "Active" group and "Inactive" group one or more operation sections each fall under. This screen data is HTML data which is processed by browser 530 of terminal 500. Then, terminal 500 displays this screen to receive the designation regarding one or more operation sections. As described later, a collision-avoidable operation that allows robot 200 to avoid collision with an object is set to be active in the operation section that falls under "Active" group in order to avoid any collision between robot 200 and an object(s), and the collision-avoidable operation is set to be inactive in the operation section that falls under "Inactive" group. A user may, for example, set any operation section to "Inactive" group in case robot 200 is required in the operation section to perform an operation that should be completed within a certain time limit. This may prevent the collision-avoidable operation from prolonging the robot's operation time beyond a certain time limit.

Operation section setting unit 12 sets one of the groups the operation section each fall under in response to a user's input to the screen.

(Generating unit)

Generating unit 13 generates a plurality of path candidates of robot 200 for each operation section that falls under "Selectable" group. Generating unit 13, using the latest OctoMap 50, generates a plurality of path candidates so that any collision between robot 200 and an object(s) is avoidable. Generating unit 13 may, for example, generate the plurality of path candidates using a probabilistic method. Examples of the probabilistic method may include a RRT (Rapidly-Exploring Random Tree) algorithm and a probabilistic road map (PRM).

Fig. 6 is a diagram that illustrates exemplified plurality of path candidates generated using a RRT algorithm. According to the RRT algorithm, provided that the start point Ps and the ending point Pe are given, points are randomly plotted in a space where computations for path planning are executed and any points that satisfy working conditions are connected to generate a path. The working conditions are defined and set in advance, which include at least the following conditions; possible positions and attitudes of robot 200, occupancy less than a threshold in OctoMap 50, and inclusion in a movable range. In the example of Fig. 6, object-occupying regions 5 are each a voxel group region having an occupancy greater than or equal to a threshold in OctoMap 50. Object-occupying region 5 is a region where any object is currently existing. As illustrated in Fig. 6, plurality of path candidates 40a to 40c connecting start points Ps to ending points Pe are generated so as to avoid object-occupying regions 5.

Generating unit 13 may evaluate each of the plurality of path candidates. The evaluation result may indicate at least one of the moving distance and moving time of the tool center point when robot 200 is moved along the path candidate.

The probabilistic method may be considered to generate a large number of paths that connect start points Ps and ending points Pe. Such a large number of paths, if all presented as the plurality of path candidates, may leave a user at a loss which one of them should be chosen. In case the probabilistic method generates abundant paths that connect start points Ps to ending points Pe, generating unit 13 may preferably select and decide, among these paths, only a predetermined number of (for example, top three to five) paths with less moving distance or moving time as the path candidates.

Generating unit 13 transmits, to terminal 500, screen data for display of a selection screen (webpage) on which the generated plurality of path candidates are displayed and a user is prompted to select one of them. This screen data is HTML data which is processed by browser 530 of terminal 500. Terminal 500 displays the selection screen on user interface 504 and receives a selection of one of the plurality of path candidates.

Generating unit 13 may evaluate each of the plurality of path candidates and then include the evaluation result on indications displayed on the selection screen. This may allow a user to select one of the plurality of path candidates in view of the moving distance or the moving time.

Generating unit 13 transmits, to terminal 500, screen data for display of a screen (webpage) that prompts a user to input teaching data defining the robot's operation in each of the operation sections that fall under "By Teaching" group. This screen data is HTML data which is processed by browser 530 of terminal 500. Then, terminal 500 displays this screen. Through this screen, terminal 500 receives an input of the teaching data. The teaching data indicates the positions and attitudes of the tool center point at all points on the path. Based on the teaching data received by terminal 500, generating unit 13 generates one path candidate in a corresponding one of the operation sections.

(Deciding unit)

In response to an input through user interface 504 of terminal 500, deciding unit 14 decides one of the path candidates selected on the selection screen for each of the operation sections that fall under "Selectable" group as the operation path in the relevant operation section.

In response to an input through user interface 504 of terminal 500, deciding unit 14 decides one path candidate generated based on the teaching data for each of the operation sections that fall under "By Teaching" group as the operation path of robot 200 in the relevant operation section.

In case a plurality of operation sections (first to Nth operation sections) are generated, deciding unit 14 decides that a path obtained by sequentially connecting the operation paths decided for the first to Nth operation sections as an entire path from the start point of the first operation section to the ending point of the Nth operation section.

Deciding unit 14 generates path data 142 of the generated operation path and stores this path data 142 in storage 123.

(Controller)

In the online period, controller 15 decides the operation of robot 200 based on OctoMap 50 and then outputs, to robot 200, a command(s) required for the decided operation.

Controller 15 identifies the position of an object(s) around robot 200 based on OctoMap 50 periodically obtained. To be specific, controller 15 identifies the position(s) of a voxel(s) 51 with an occupancy greater than or equal to a predefined threshold as the object's position. Controller 15 identifies, as a dynamic object, an object at one of the identified positions that differs from any positions indicated by static object data 143.

Controller 15, by leveraging the technology described in "Mohammad Safeea, et.al.(two other authors) "On-line collision avoidance for collaborative robot manipulators by adjusting off-line generated paths: An industrial use case", Robotics and Autonomous Systems, Elsevier, 2019, 119, pp. 278-288", controls robot 200 using two different potentials; repulsion potential that drives the robot to move away from a dynamic object, and attractive potential that drives the robot to move along the operation path indicated by path data 142.

Controller 15 calculates a repulsion velocity vector $v_{cp,rep}$ at a point most proximate to a dynamic object (for example, human) around manipulator 202. The unit vector "s" of repulsion velocity vector $v_{cp,rep}$ is expressed as defined in the following formula 1).

$$s = \frac{r_1 - r_2}{|r_1 - r_2|} \qquad (1)$$

In the formula 1), $r_1$ is the position vector of manipulator 202 at a point most proximate to a dynamic object nearby. Further, $r_2$ is the position vector of the dynamic object at a point most proximate to manipulator 202. Therefore, the unit vector "s" is directed from the dynamic object toward manipulator 202.

The amplitude $|v_{cp,rep}|$ of repulsion velocity vector $v_{cp,rep}$ is calculated as follows; a velocity $v_{rep1}$ is calculated from a minimum distance $d_{min}$ between the dynamic object and manipulator 202, a velocity $v_{rep2}$ is calculated in accordance with a relative velocity between the dynamic object and manipulator 202, and velocity $v_{rep1}$ and velocity $v_{rep2}$ are summed ($v_{rep1}+v_{rep2}$) and then multiplied by a transfer function, $\gamma(=1-\exp(-t/\tau))$, of the first order time lag.

Velocity $v_{rep1}$ is calculated as defined in the following formula 2). In the Formula 2), "$k_1$" is a constant, "$d_{cr}$" is the width of a no-entry zone set around manipulator 202; this term is previously defined and set, and "$d_0$ " is an offset distance; this term is defined by the following formula 3). In the formula 3), $d_1$ is a constant previously defined and set in accordance with a distance that human finds risky. Further, "$c_v$" is a constant, and "$v_{rel}$" is a relative velocity between the dynamic object and manipulator 202. In the event of an increasing distance between the dynamic object and manipulator 202, $v_{rel}$ shows a positive value. In the event of any decrease of the distance between the object and manipulator 202, on the other hand, $v_{rel}$ shows a negative value.

$$v_{rep} = \begin{cases} k_1\left(\frac{d_0}{d_{min} - d_{cr}}\right), & if \ \ d_{min} - d_{cr} < d_0 \\ 0, & if \ \ d_{min} - d_{cr} \geq d_0 \end{cases} \quad (2)$$

$$d_0 = \begin{cases} d_1 - c_v v_{rel} \ , & v_{rel} < 0 \\ d_1, & v_{rel} \geq 0 \end{cases} \quad (3)$$

Velocity $v_{rep2}$ is calculated using the following formula 4). In the Formula 4), "$k_2$" is a constant, and "c" is a coefficient that changes with the minimum distance $d_{min}$ between the dynamic object and manipulator 202. For instance, "c" is previously defined and set, so that the value of "c" equals to 1 when the minimum distance $d_{min}$ is less than a predetermined threshold Li and equals to 0 when the minimum distance $d_{min}$ is greater than a predetermined threshold $L_2$ (>$L_1$), and the value of "c" changes from 1 to 0 with an increase of the minimum distance $d_{min}$ when the minimum distance $d_{min}$ stays within the range of thresholds $L_1$ to $L_2$.

$$v_{rep2} = \begin{cases} -ck_2 v_{rel}, & v_{rel} < 0 \\ 0, & v_{rel} \geq 0 \end{cases} \quad (4)$$

Repulsion velocity vector $v_{cp,rep}$ thus calculated is directed away from the dynamic object and increases its amplitude with a smaller distance between manipulator 202 and the dynamic object. Thus, repulsion velocity vector $v_{cp,rep}$ represents a repulsion potential that drives the robot to move away from the dynamic obj ect.

Controller 15 further calculates an attraction velocity vector $v_{e,att}$ of end effector 230. Attraction velocity vector $v_{e,att}$ is expressed as defined in the following formula 5).

$$v_{e,att} = \beta(\psi_p + \psi_i) \ldots \quad 5)$$

In the formula 5), $\psi_p$ is the proportional term, while $\psi_i$ is the integral term.

The proportional term $\psi_p$ is expressed as defined in the following formula 6).

$$\psi_p = -K_p e \ldots \quad 6)$$

In the Formula 6), "$K_p$" is a proportionality coefficient, and "e" is a position error vector in which the start point is a point of end effector 230 (for example, tool center point) and the ending point is a next point that the robot should pass on its operation path.

Integral term $\psi_i$ is updated by integrating the position error "e", as defined in the formula 7). In the foregoing formula, $K_i$ is an integration coefficient. During a period in which a difference between minimum distance $d_{min}$ and the width of no-entry zone $d_{cr}$ is greater than offset distance $d_0$, integral $\psi_i$ is updated for a product of -$K_i$ and an integration value of position error vector "e". Integral term $\psi_i$, however, is not updated in any other period. Integral term $\psi_i$ is initially 0.

$$\psi_i \leftarrow \begin{cases} \psi_i - K_i \int_t^{t+\Delta t} e \ dt, & if \ \ d_{min} - d_{cr} > d_0 \\ \psi_i, & if \ \ d_{min} - d_{cr} \leq d_0 \end{cases} \quad (7)$$

In this formula, $\beta$ is calculated by assigning, to the following formula 8), minimum distance $d_{min}$ between the dynamic object and manipulator 202, width of no-entry zone $d_{cr}$ set around manipulator 202, and offset distance $d_0$.

$$\beta = \left( \frac{2}{1 + e^{-\left(\frac{d_{min} - d_{cr}}{d_0}\right)^2}} - 1 \right) \qquad (8)$$

Controller 15 calculates velocity vectors $q_{rep}$ of joints 20_1 to 20_6 of manipulator 202 using the following formula 9) and repulsion velocity vector $v_{cp,rep}$ calculated as described above. Controller 15 calculates velocity vectors $q_{att}$ of joints 20_1 to 20_6 of manipulator 202 using the following formula 10) and attraction velocity vector $v_{e,att}$ calculated as described above.

$$\dot{q}_{rep} = J_{cp}^T \left( J_{cp} J_{cp}^T + \lambda^2 I \right)^{-1} v_{cp.rep} \qquad (9)$$

$$\dot{q}_{att} = J_e^T \left( J_e \, J_e^T + \lambda^2 I \right)^{-1} v_{e.att} \qquad (10)$$

In the formula 9), $J_{cp}$ is the Jacobian matrix at a point of manipulator 202 most proximate to the dynamic object nearby. In the formula 10), $J_e$ is the Jacobian matrix at a point of end effector 230 (for example, tool center point). In this formula, $\lambda$ is a dumping constant, and I is the identity matrix.

Controller 15 calculates a composite vector q of velocity vectors $q_{rep}$ and $q_{att}$ using the following formula 11). Then, controller 15 generates commands relevant to the position and rotation angle of each joint of manipulator 202 in accordance with the composite vector q and outputs the generated commands to manipulator controller 204. Thus, any collision between manipulator 202 and the dynamic object may be avoidable.

$$\dot{q} = \dot{q}_{att} + \dot{q}_{rep} \qquad (11)$$

As a result of the command generated and outputted according to the composite vector q, the component of velocity vector $q_{rep}$ results in a relatively small component, while velocity vector $q_{att}$ results in a relatively large component insofar as a large distance is secured between the dynamic object and manipulator 202. Thus, manipulator 202 is driven to move along the operation path. This movement of manipulator 202 along the operation path is referred to as "normal operation".

As manipulator 202 approaches more closely to the dynamic object, the component of velocity vector $q_{rep}$ becomes relatively large, while the component of velocity vector $q_{att}$ becomes relatively small. Manipulator 202 deviates from the operation path, starting to move away from the dynamic object. Thus, any collision between manipulator 202 and the dynamic object may be avoidable. This movement of manipulator 202 away from the dynamic object is referred to as "collision-avoidable operation".

As the dynamic object moves away from manipulator 202, the component of velocity vector $q_{rep}$ becomes relatively small and the component of velocity vector $q_{att}$ becomes relatively large. Manipulator 202 then moves toward the operation path, then starting to move along the operation path. This movement of manipulator 202 toward the operation path is referred to as "return operation".

When the current operation section of robot 200 falls under "Inactive" group, controller 15 sets the velocity vector $q_{rep}$ to 0 and drives manipulator 202 to perform the normal operation alone. This may be rephrased that controller 15 disables the collision-avoidable operation of manipulator 202 when the current operation section of robot 200 falls under "Inactive" group. When the current operation section of robot 200 falls under "Active" group, controller 15 does not set the velocity vector $q_{rep}$ to 0, while activating the collision-avoidable operation of manipulator 202.

In case the collision-avoidable operation is repeatedly performed, there is a higher risk of manipulator 202 colliding with a static object(s) nearby. To avoid such a risk of collision with a static object(s), controller 15 executes the following processes in parallel to the other processes.

At regular intervals, controller 15 periodically calculates the minimum distance between manipulator 202 and a static object(s) present at a position(s) indicated by static object data 143. When the minimum distance between the static object and manipulator 202 is less than or equal to a predefined threshold Th1 and the amplitude $|q_{rep}|$ of velocity vector $q_{rep}$ is greater than a predefined threshold Th2, controller 15 generates a command for stoppage of the motions of all of joints 20_1 to 20_6 and outputs the generated command to manipulator controller 204. In response to the command(s) being received, manipulator 202 ceases to operate. When manipulator 202 thus stops its operation, it is referred to as "stoppage operation".

<Exemplified screen of the user interface>

Fig. 7 is a diagram that illustrates an exemplified setting screen used to set an operation section. Fig. 7 shows a setting screen 60 for setting of a third operation section SEC3. Setting screen 60 is generated by processor 121 as a webpage and is displayed on user interface 504 of terminal 500. As illustrated in Fig. 7, setting screen 60 includes a display area 61, input fields 62 and 63 and buttons 64 and 65.

Display area 61 is an area where a virtual space is displayed that corresponds to a real space for the location of robot 200. In display area 61 is displayed a robot model 70 generated based on shape data 141.

Button 64 is used to add a new operation section. In response to button 64 being pressed down, processor 121 updates setting screen 60 so that a cubic model 72 that defines a new operation section (third operation section SEC3 in the example of Fig. 7) is further included in display area 61. Cubic model 72 represents a range of possible positions (movable range) of the tool center point in the new operation section. Setting screen 60 is allowed to receive an instruction to change the position and size of cubic model 72. In case a previous operation section is currently set (second operation section SEC2 in the example of Fig. 7), position and size changes of cubic model 72 are instructed so as to satisfy the restriction that the ending point of the previous operation section lies on the model's surface. Processor 121 updates setting screen 60 so as to follow the instruction and changes the position and size of cubic model 72 displayed in display area 61.

Button 65 is used to end setting of the operation section. In response to button 65 being pressed down, processor 121 ends the operation section setting.

In display area 61, processor 121 disposes a virtual object model 73 at a position indicated by static object data 143. Virtual object model 73 is a static object model. This may allow a user to grasp a positional relationship between the operation section represented by cubic model 72 and a static object(s) around robot 200.

Processor 121 may locate, in display area 61, virtual object model 73 overlapping cubic model 72 alone.

Setting screen 60 receives an input of a start point 72s and an ending point 72e of a new operation section on the surface of cubic model 72. In case a previous operation section is currently set (second operation section SEC2 in the example of Fig. 7), setting screen 60 receives an input of ending point 72e alone because the ending point of the previous operation section is decided as start point 72s of a new operation section.

Start point 72s and ending point 72e are expressed using an XYZ coordinate system that defines the position of the tool center point of robot 200 and Euler angles (Rx, Ry, Rz) that define the attitude of the tool center point. The Euler angles refer to rotation angles centered on XYZ axes relative to a predefined reference attitude.

When setting screen 60 receives designation of a point on the surface of cubic model 72, processor 121 updates setting screen 60 so that robot model 70 is located at the designated point. When setting screen 60 receives an input of an instruction to change the attitude of robot model 70, processor 121 updates setting screen 60 so that robot model 70 takes the position and attitude as requested in the instruction input. A user may designate a point that corresponds to ending point 72e of a new operation section and input an instruction to change the attitude of robot model 70 so as to follow the attitude at ending point 72e. Processor 121 sets ending point 72e of the new operation section in accordance with the instruction inputted to setting screen 60.

In case a previous operation section is not currently set, processor 121 may set start point 72s of a new operation section in a manner similar to the setting of ending point 72e.

Input field 62 is used to input whether the operation section falls under "Active" group or "Inactive" group. In accordance with the input received on input field 62, processor 121 decides which one of "Active" group and "Inactive" group the operation section falls under.

Input field 63 is used to input whether the operation section falls under "Selectable" group or "By Teaching" group. In accordance with the input received on input field 63, processor 121 decides which one of "Selectable" group and "By Teaching" the operation section falls under.

In response to "By Teaching" group being inputted as a group the operation section falls under, processor 121 transmits, to terminal 500, screen data for display of a screen (not illustrated in the drawings) that prompts a user to input teaching data defining the operation of manipulator 202 in the operation section. Terminal 500 displays the screen on user interface 504 to receive an input of teaching data. Processor 121 decides the operation path of the relevant operation section based on the received teaching data.

In response to "Selectable" group being inputted as a group the operation section falls under, processor 121 generates a plurality of path candidates that connect start point 72s and ending point 72e of the operation section and that pass through cubic model 72. Processor 121 transmits, to terminal 500, screen data for display of a selection screen that presents a plurality of path candidates and prompts a user to select one of the plurality of path candidates. Then, terminal 500 displays the selection screen on user interface 504.

Fig. 8 is a diagram that illustrates an exemplified selection screen on which a user is prompted to select one of a plurality of path candidates. A selection screen 60A illustrated in Fig. 8 includes display area 61 similarly to setting screen 60 of Fig. 7. Selection screen 60A includes a radio button 66, a display field 67, and a button 68. As illustrated in Fig. 8, path candidates 40a to 40c are displayed in display area 61.

In response to one of path candidates 40a to 40c being clicked, processor 121 generates selection screen 60A to allow robot model 70 to move along the clicked one of the path candidates. This may help a user to readily know the operation of robot 200 that moves along each path candidate.

Display field 67 displays thereon the evaluation result of path candidates 40a to 40c. As described above, the evaluation result presents, for example, at least one of the moving distance and moving time of the tool center point when robot 200 is moved along the path candidate.

Radio button 66 is used to select one of path candidates 40a to 40c. Processor 121 updates selection screen 60A, so that the path candidate selected with radio button 66 (path candidate 40a in Fig. 8) is displayed with a solid line and the other path candidates (path candidates 40b and 40c in Fig. 8) are displayed with a broken line in display area 61.

Button 68 is used to confirm the selected path candidate. Processor 121 decides, as the operation path of a target operation section, the path candidate selected with radio button 66 when button 68 is pressed down.

In display area 61, the display format of an operation path in each operation section may preferably differ depending on which one of "Active" group and "Inactive group" the relevant operation section falls under. For example, an operation path of the operation section that falls under "Active" group is displayed in green, while an operation path of the operation section that falls under "Inactive" group is displayed in red.

<Processing flow of the control device>

(Offline period)

Fig. 9 is a flow chart that illustrates a processing flow of a control device in an offline period.

First, processor 121 determines whether designation of an operation section has been received (step S1). Processor 121 determines that the designation of an operation section has been received when button 64 is pressed down on setting screen 60 presented on terminal 500 (see Fig. 7). Without the receipt of any designation of an operation section (NO in step S1), the processing flow returns to step S1.

When it is determined that the designation of an operation section has been received (YES in step S1), processor 121 decides which one of the groups the operation section falls under in accordance with the input received on setting screen 60 (step S2). Next, processor 121 decides the operation path of the relevant operation section in accordance with the input received on setting screen 60 (step S3).

Next, processor 121 determines whether designation of a next operation section has been received (step S4). Processor 121 determines that the designation of a next operation section has been received when button 64 is pressed down on setting screen 60 of Fig. 7. When the designation of a next operation section has been received (YES in step S4), the processing flow returns to step S2.

Without the receipt of any designation of a next operation section (NO in step S4), processor 121 determines whether an instruction to end the process has been received (step S5). Processor 121 determines that the process-ending instruction has been received when button 65 is pressed down on setting screen 60 of Fig. 7.

When the step determines that the process-ending instruction fails to be received (NO in step S5), the processing flow returns to step S4. When the step determines that the process-ending instruction has been received (YES in step S5), the processing flow finishes.

Fig. 10 is a flow chart that illustrates a subroutine processing flow in step S3 of Fig. 9.

Processor 121 selects one of one or more operation sections set earlier (step S11).

Next, processor 121 determines, based on the input received on setting screen 60, which one of "Selectable" group and "By Teaching" group the selected operation section falls under (step S12).

When step S12 determines that the operation section falls under "Selectable" group, processor 121 generates a plurality of path candidates for the selected operation section (step S13). Processor 121 evaluates each of the generated plurality of path candidates (step S14).

Processor 121 presents a selection screen including the plurality of path candidates and their evaluation results (step S15). Then, this selection screen is displayed on, for example, user interface 504 of terminal 500. Processor 121 receives, through the selection screen, a selection of one of the plurality of path candidates (step S16).

Processor 121 decides the selected path candidate as the operation path of the target operation section (step S17).

When step S12 determines that the operation section falls under "By Teaching" group, processor 121 presents a screen that prompts a user to input teaching data defining the operation of manipulator 202 to receive the inputted teaching data (step S18).

Processor 121 decides the operation path of the selected operation section based on the received teaching data (step S19).

Subsequent to step S17 or step S19, processor 121 determines whether any other operation section remains unprocessed (step S20).

For any other remaining operation section (YES in step S20), the processing flow returns to step S11. Without any other operation section to be processed (NO in step S20), the processing flow proceeds to step S4 of Fig. 9.

(Online period)

Fig. 11 is a flow chart that illustrates a robot control flow in the online period. Processor 121 decides a next point which the robot should pass on its operation path (step S31).

Next, processor 121 determines whether the minimum distance between the static object and manipulator 202 is less than or equal to threshold Th1 (step S32).

When the minimum distance between the static object and manipulator 202 is determined as being greater than threshold Th1 (NO in step S32), processor 121 determines whether the current operation section falls under "Inactive" group (step S33). When the current operation section is determined as being included in "Active" group (NO in step S33), the control flow proceeds to step S35. When the current operation section is determined as being included in "Inactive" group (YES in step S33), processor 121 sets the velocity vector $q_{rep}$ to 0 (step S34). Then, the processing flow proceeds to step S35.

In step S35, processor 121 calculates the composite vector q described above. Then, processor 121 generates a command according to the composite vector q and outputs the generated command to robot 200 (step S36).

When the minimum distance between the static object and manipulator 202 is determined as being less than or equal to threshold Th1 (YES in step S32), processor 121 determines whether the risk of collision with a dynamic object(s) is greater than a reference level (step S37). For example, processor 121 determines that the risk of collision with the dynamic object is greater than the reference level when the amplitude $|q_{rep}|$ of $q_{rep}$ is greater than threshold Th2. The risk of collision with the dynamic object less than or equal to the reference level means that the attractive potential that drives the robot to move along the operation path is greater than the repulsion potential that drives the robot to move away from the dynamic object. The operation that follows the command generated according to the composite vector q is either the return operation or normal operation. When the risk of collision with the dynamic object is determined as being less than or equal to the reference level (NO in step S37), the processing flow proceeds to step S33.

When the risk of collision with the dynamic object is determined as being greater than the reference level (YES in step S37), processor 121 generates a command for stoppage operation and outputs the generated command to robot 200 (step S38).

Subsequent to step S36 or step S38, processor 121 determines whether robot 200 has arrived at the ending point of the last operation section (step S39). When it is determined that the robot has not arrived at the ending point of the last operation section yet (NO in step S39), the processing flow returns to step S31. When it is determined that the robot has arrived at the ending point of the last operation section (YES in step S39), the processing flow ends.

<Modified example>

(Modified example 1)

Processor 121 may receive an instruction to adjust an operation path decided for each operation section. For instance, processor 121 may transmit, to terminal 500, screen data for display of a screen (webpage) that presents the operation path of each operation section and receives an input for shift of an optional point(s) on the operation path. Processor 121 may change each operation path in accordance with the point shift inputted to the screen.

(Modified example 2)

Processor 121 may receive an instruction to split one operation section into two or more operation sections. For example, processor 121 transmits, to terminal 500, screen data for display of a screen (webpage) on which designation of a splitting surface(s) is received. On this screen, processor 121 splits the operation section along the designated splitting surface(s).

Any user, who is not accustomed to setting an operation path for robot 200, may find it difficult to suitably designate a plurality of operation sections for a broad range from departure to destination. Such a user may designate a broad range from departure to destination as an initial operation section and then decides and sets the initial operation section to be included in "Selectable" group.

Fig. 12 is an exemplified setting screen used when a broad range is set as an initial operation section. In a display area 61 on a selection screen 60B illustrated in Fig. 12 are displayed path candidates 40d to 40f that connect start point 72s and ending point 72e designated on the surface of cubic model 72 corresponding to an initial operation section SEC1. A user selects one of path candidates 40d to 40f using radio button 66. Thus, an operation path is decided for initial operation section SEC1.

A user, while checking the decided operation path, may split initial operation section SEC1 into a plurality of operation sections. For example, a user may designate a splitting surface(s) so that the robot passes through a position on the operation path at which the direction of travel changes. Thus, the operation sections may be differently set by timings of operational changes.

Fig. 13 is an exemplified setting screen used when an initial operation section is split into a plurality of operation sections. In display area 61 on a setting screen 60C illustrated in Fig. 13, splitting surfaces 77(1) and 77(2) are defined to split initial operation section SEC1 into three operation sections. Processor 121 splits initial operation section SEC1 into operation sections SEC1(1), SEC1(2), and SEC1(3) along splitting surfaces 77(1) and 77(2). The movable ranges of operation sections SEC1(1) to SEC1(3) are illustrated with cubic models 72(1) to 72(3). Processor 121 splits the operation path decided for initial operation section SEC1 into operation paths 42(1) to 42(3) along splitting surfaces 77(1) and 77(2). Operation paths 42(1) to 42(3) are respectively included in operation sections SEC1(1) to SEC1(3).

The modified example 2 may be combined with the modified example 1. For example, setting screen 60C may include an input field 69 for selection of an adjustment target section. A user inputs an operation section targeted for adjustment to input field 69. In the example of Fig. 13, operation section SEC1(1) has been selected as a target section to be adjusted. Setting screen 60C receives an input for point shift on the operation path of the operation section selected for adjustment (operation path 42(1) of operation section SEC1(1)) in Fig. 13). For the point shift, a user may, for example, drag and drop an optional point(s) on operation path 42(1). Then, processor 121 changes the operation path in response to the drag-and-drop shift. Thus, an operation path may be readily set in a simplified manner by any user who is not accustomed to the operation path setting for robot 200.

Setting screen 60C includes a button 78. When button 78 is pressed down, processor 121 generates path data 142 in accordance with the adjusted operation path and then stores the generated path data 142 in storage 123.

Setting screen 60C may receive an input of which one of "Active" group or "Inactive" group the split two or more operation sections each fall under. Then, processor 121, based on the input thus received, decides which one of "Active" group or "Inactive" group the split two or more operation sections each fall under.

(Modified example 3)

Processor 121 operating as generating unit 13 may evaluate the degree of risk of collision with an object for each of the plurality of path candidates generated for each operation section that falls under "Selectable" group.

To evaluate the degree of risk of collision with an object(s), a risk map Map($p_{tcp}$,$l_{risk}$) is obtained in the online period at each position of the tool center point of robot 200. Risk map Map($p_{tcp}$,$l_{risk}$) is an indication of the risk of collision of robot 200 with an object(s) around robot 200.

Risk map Map($p_{tcp}$,$l_{risk}$) indicates a risk value $l_{risk}$ when the tool center point of robot 200 is located at each one of a plurality of voxels $p_{tcp}$ arranged in a space including robot 200. Voxel $p_{tcp}$ of risk map Map($p_{tcp}$,$l_{risk}$) may be sized either equally or differently to voxel 51 of OctoMap 50. Each voxel $p_{tcp}$ is identifiable with xyz coordinates.

Processor 121, which operates as a risk map obtainer, generates an initial risk map Map($p_{tcp}$,$l_{risk}$) based on OctoMap 50 obtained by a timing of absence of human around robot 200 (for example, timing before robot 200 starts to operate). Because of absence of human around robot 200, voxels 51 in a region occupied by a static object(s) alone show a high occupancy in OctoMap 50. Processor 121 generates initial risk map Map($p_{tcp}$,$l_{risk}$), so that risk value $l_{risk}$ of voxels $p_{tcp}$ located in a region occupied by a static object(s) shows the value of 0.97 and risk value $l_{risk}$ of the remaining voxels $p_{tcp}$ shows 0.

While robot 200 is being operated, processor 121 updates risk map Map($p_{tcp}$,$l_{risk}$) periodically at regular intervals (for example, every few hours or few days, per day, per week, per month, every few months).

Processor 121 updates risk map Map($p_{tcp}$,$l_{risk}$) as follows based on velocity vector $q_{rep}$ calculated at the regular intervals.

First, processor 121 calculates a risk likelihood $q_{risk_likelihood}$ using the following formula (12) every time when velocity vector $q_{rep}$ is calculated for a predetermined period.

$$q_{risk_likelihoo} = \sum_j \frac{\left|\dot{q}^j_{rep}\right|}{\dot{q}^j_{max}} \qquad (12)$$

In the formula 12), "j" is a variable that identifies each of joints 20_1 to 20_6 and is an integer in the range of 1 to 6. In this formula, $q^j_{rep}$ is an angular velocity component of joint 20_j of velocity vector $q_{rep}$, and $q^j_{max}$ is a maximum

angular velocity of joint 20_j. As described above, velocity vector $q_{rep}$ is calculated using repulsion velocity vector $v_{cp,rep}$ calculated in accordance with the repulsion potential that drives the robot to move away from a dynamic object(s) and Jacobian matrix $J_{cp}$ at a point most proximate to the dynamic object around manipulator 202. Thus, a greater risk likelihood $q_{risk_likelihood}$ may result in a higher risk of collision with a dynamic object(s).

Processor 121 generates a risk likelihood map $Map(p_{tcp},q_{risk_likelihood})$ indicating an integrated value of risk likelihood $q_{risk_likelihood}$ for a predetermined period when the tool center point is located at a relevant one of voxels $p_{tcp}$.

Next, processor 121 normalizes risk likelihood map $Map(p_{tcp},q_{risk_likelihood})$ using the following formula 13) to generate a normalized map $Map(p_{tcp},Ratio_{risk})$. In the formula 13), "$q_{risk_likelihood_k}$" refers to risk likelihood $q_{risk_likelihood}$ of kth voxel $p_{tcp_k}$, and N is the total number of voxels $p_{tcp}$.

$$Ratio_{risk} = \frac{q_{risk_likelihoo\ \ _k}}{\sum_{k=0}^{N-1} q_{risk_likelihood_k}} \qquad (13)$$

During the operation of robot 200, the tool center point does not necessarily pass through all of voxels $p_{tcp}$. In the normalized map $Map(p_{tcp},Ratio_{risk})$, $Ratio_{risk}$ of a certain voxel $p_{tcp}$ may be 0.8, while $Ratio_{risk}$ of an adjacent voxel $p_{tcp}$ may be 0. Such a difference between the risk values is possible because the tool center point never passed through the adjacent voxel $p_{tcp}$, regardless of a large value of velocity vector $q_{rep}$ when the tool center point is at the certain voxel $p_{tcp}$. Supposing that the tool center point is located at the adjacent voxel $p_{tcp}$, velocity vector $q_{rep}$ may be anticipated as exhibiting a relatively large value. Therefore, processor 121 dilates the normalized map $Map(p_{tcp},Ratio_{risk})$ and thus generates a dilated map $Map(p_{tcp},infRatio_{risk})$.

Fig. 14 is a diagram that illustrates a dilation process. Supposing that there is an increasing risk, following a normal distribution based on one voxel size being a standard deviation, as illustrated in Fig. 14, a dilation process is performed, in which any influence from a $Ratio_{risk}$ of each voxel $p_{tcp}$ is added to the values of $Ratio_{risk}$ of the surrounding voxels $p_{tcp}$.

Processor 121 updates risk map $Map(p_{tcp},I_{risk})$ periodically at regular intervals using the dilated map $Map(p_{tcp},infRatio_{risk})$ in accordance with the following formula 14).

$$\left.\begin{array}{c} \boldsymbol{RelI_{risk}} = logOds(\boldsymbol{infRatio_{risk}}) + logOds(\boldsymbol{I_{risk}}) \\ \boldsymbol{I_{risk}} = inv_logOds(\boldsymbol{RelI_{risk}}) \\ Update \quad Map(p_{tcp}, I_{risk}) \end{array}\right\} \qquad (14)$$

In the formula 14), logOds is a log-odds function, which is calculated using the following formulas 15) and 16). In this formula, inv_logOds is an inverse log-odds function, which is calculated using the following formula 17).

$$logOds(infRatio_{risk}) = \ln\frac{infRatio_{risk}}{1 - infRatio_{risk}} \qquad (15)$$

$$logOds(I_{risk}) = \ln\frac{I_{risk}}{1 - I_{risk}} \qquad (16)$$

$$inv_logOds(RelI_{risk}) = \frac{1}{1 + \left(\frac{1}{e^{RelI_{risk}}}\right)} \qquad (17)$$

Processor 121 operating as generating unit 13 evaluates the risk of collision with an object(s) using a risk map $Map(p_{tcp},I_{risk})$ obtained in the online period. For instance, the degree of collision is expressed using summed risk values $I_{risk}$ of voxels $p_{tcp}$ that a corresponding one of the path candidates passes through.

Processor 121 may generate a selection screen including the degree of the risk of collision with an object as an evaluation result of each path candidate. This may allow a user to select one of the plurality of path candidates in view of any risk of collision with an object.

(Modified example 4)

When the minimum distance between the static object and manipulator 202 is less than or equal to threshold Th1 and amplitude $|q_{rep}|$ of velocity vector $q_{rep}$ is greater than threshold Th2, controller 15 generates a command for stoppage of the motions of all of joints 20_1 to 20_6. Instead, controller 15 may generate a command for stoppage of the motions of all of joints 20_1 to 20_6 when the minimum distance between the static object and manipulator 202 is less than or equal to threshold Th1 and risk likelihood $q_{risk_likelihood}$ described in the modified example 3 is greater than a predefined threshold Th3.

(Modified example 5)

Processor 121 operating as controller 15 may generate, in the online period, operational status information indicating whether the current operation of robot 200 is the normal operation, collision-avoidable operation, return operation or stoppage operation and then output the generated information. The generated information may be outputted to terminal 500 or outputted to an indicator not illustrated in the drawings. Thus, a user may readily know the current operation of robot 200 by simply checking this information.

For instance, processor 121 may generate the operational status information using a parameter indicating the risk of collision with a dynamic object(s) (hereinafter, referred to as "risk parameter") and the minimum distance between the static object and manipulator 202. An example of the risk parameter is risk likelihood $q_{risk_likelihood}$ described in the modified example 3. Another example of the risk parameter is the amplitude $|q_{rep}|$ of velocity vector $q_{rep}$.

Processor 121 may, for example, generate the operational status information indicating that the current operation of robot 200 is the normal operation when the risk parameter is less than or equal to a predefined threshold Th4 and robot 200 is currently on the operation path.

Processor 121 may generate the operational status information indicating that the current operation of robot 200 is the collision-avoidable operation when the risk parameter is greater than threshold Th4 and the minimum distance between the static object and manipulator 202 is greater than threshold Th1.

Processor 121 may generate the operational status information indicating that the current operation of robot 200 is the stoppage operation when the risk parameter is greater than threshold Th4 and the minimum distance between the static object and manipulator 202 is less than or equal to threshold Th1.

Processor 121 may generate the operational status information indicating that the current operation of robot 200 is the return operation when the risk parameter is less than or equal to threshold Th4 and robot 200 is currently not on the operation path.

When the amplitude $|q_{rep}|$ of velocity vector $q_{rep}$ is used as the risk parameter, threshold Th4 is used in the same manner as threshold Th2 used to determine whether the stoppage operation should be performed. When the risk likelihood $q_{risk_likelihood}$ is used as the risk parameter, threshold Th4 is used in the same manner as threshold Th3 described in the modified example 4.

(Modified example 6)

Generating unit 13 may generate a selection screen on which the plurality of path candidates and the risk map $Map(p_{tcp}, I_{risk})$ described in the modified example 3 are overlaid on each other and displayed. This may allow a user to select any one of the plurality of path candidates with a lower risk of collision with an object(s).

Fig. 15 is a diagram of a selection screen according to a modified example 6. As illustrated in Fig. 15, a selection screen 60D differs from selection screen 60A illustrated in Fig. 8 in that risk map $Map(p_{tcp}, I_{risk})$ is overlaid on path candidates 40a to 40c. Risk map $Map(p_{tcp}, I_{risk})$ is displayed in the form of a space distribution of concentrations variable with risk value $I_{risk}$. This may help a user to know the degree of risk of collision with an object(s) when robot 200 is put in motion along each of path candidates 40a to 40c, allowing the user to select one path candidate in view of the risk.

§3 Additional remarks

As described thus far, the embodiment includes the following technical aspects.

(Aspect 1)

An apparatus (100) configured to generate an operation path of a robot (200) before the robot (200) starts to operate, the apparatus (100) including:

a generating unit (13, 121) configured to generate a plurality of path candidates (40a-40f) of the robot (200) for a target operation section of one or more operation sections designated earlier, the generating unit (13, 121) being configured to provide data for display of a screen (60A, 60B, 60D) on which a selection of one of the plurality of path candidates (40a-40f) is to be received; and

a deciding unit (14, 121) configured to decide the selected one of the plurality of path candidates as the operation path of the target operation section.

(Aspect 2)

The apparatus (100) according to aspect 1, in which the generating unit (13, 121) generates the plurality of path candidates (40a-40f) in a manner that any collision with an object is avoidable using region-of-occupancy information (50) indicating a region occupied by the object in a space where the robot (200) is located.

(Aspect 3)

The apparatus (100) according to aspect 1 or 2, in which the generating unit (13, 121) generates the plurality of path candidates using a probabilistic method.

(Aspect 4)

The apparatus (100) according to one of aspects 1 to 3, in which the generating unit (13, 121) evaluates each of the plurality of path candidates (40a-40f), and the screen (60A, 60B, 60D) includes an evaluation result of each of the plurality of path candidates (40a-40f).

(Aspect 5)

The apparatus (100) according to aspect 4, in which the evaluation result presents at least one of moving distance, moving time, and degree of risk of collision with the object for each of the plurality of path candidates (40a-40f).

(Aspect 6)

The apparatus (100) according to one of aspects 1 to 5, in which the one or more operation sections includes first to Nth operation sections, the N being an integer greater than or equal to 2, the apparatus (100) further including a setting unit (12, 121) configured to set which one of a first group and a second group the first to the Nth operation sections each fall under,

the setting unit (12, 121) sets one or more of the first to the Nth operation sections that fall under the first group as the target operation section,

the deciding unit decides the operation path of the robot (200) for one or more of the first to the Nth operation sections that fall under the second group based on teaching data designated, and

the deciding unit decides a path obtained by connecting the operation paths decided for the first to the Nth operation sections as an entire path from a start point of the first operation section to an ending point of the Nth operation section.

(Aspect 7)

The apparatus (100) according to aspect 6, further including a controller (15, 121) configured to operate the robot (200) along the entire path, in which

the setting unit (12, 121) further sets which one of a third group and a fourth group the first to the Nth operation sections each fall under,

the controller (15, 121) is operable to control the robot (200) so as to perform a collision-avoidable operation that allows the robot (200) to avoid any collision with an object around the robot (200),

the controller (15, 121) activates the collision-avoidable operation when the robot (200) is in motion along the operation path corresponding to one or more of the first to the Nth operation sections that fall under the third group, and

the controller (15, 121) disables the collision-avoidable operation when the robot (200) is in motion along the operation path corresponding to one or more of the first to the Nth operation sections that fall under the fourth group.

(Aspect 8)

The apparatus (100) according to aspect 7, in which the collision-avoidable operation includes an operation that allows the robot (200) to move away from a dynamic object,

the controller (15, 121) evaluates a risk of collision between the robot (200) in motion and a static object around the robot (200), and
the controller (15, 121) stops the robot (200) in response to the risk being greater than a predefined second reference.

(Aspect 9)

A method for generating an operation path of a robot (200) before the robot (200) starts to operate, the method including:

receiving designation of one or more operation sections;
generating a plurality of path candidates (40a-40f) of the robot (200) for a target operation section of the one or more operation sections;
displaying the plurality of path candidates (40a-40f) on a user interface (504;
receiving a selection of one of the plurality of path candidates (40a-40f); and
deciding the selected one of the plurality of path candidates (40a-40f) as the operation path of the target operation section.

(Aspect 10)

A program that prompts a computer to execute a method for generating an operation path of a robot (200) before the robot (200) starts to operate, the method including:

receiving designation of one or more operation sections;
generating a plurality of path candidates (40a-40f) of the robot (200) for a target operation section of the one or more operation sections;
providing data for display of a screen (60A, 60B, 60D) on which a selection of one of the plurality of path candidates (40a-40f) is to be received; and
deciding the selected one of the plurality of path candidates as the operation path of the target operation section.

All of the embodiments of the present disclosure are described herein by way of illustration and example only and should not be construed as limiting by any means the scope of the present disclosure. The scope of the present disclosure is solely defined by the appended claims and is intended to cover the claims, equivalents, and all of possible modifications made without departing the scope of the present disclosure.

## Claims

1. An apparatus (100) configured to generate an operation path of a robot (200) before the robot (200) starts to operate, the apparatus (100) comprising:

   a generating unit (13, 121) configured to generate a plurality of path candidates (40a-40f) of the robot (200) for a target operation section of one or more operation sections designated, the generating unit (13, 121) being configured to provide data for display of a screen (60A, 60B, 60D) on which a selection of one of the plurality of path candidates (40a-40f) is to be received; and
   a deciding unit (14, 121) configured to decide the selected one of the plurality of path candidates as the operation path of the target operation section.

2. The apparatus (100) according to claim 1, wherein the generating unit (13, 121) is configured to generate the plurality of path candidates (40a-40f) in a manner that any collision with an object is avoidable using region-of-occupancy information (50) indicating a region occupied by the object in a space where the robot (200) is located.

3. The apparatus (100) according to claim 1 or 2, wherein the generating unit (13, 121) is configured to generate the plurality of path candidates using a probabilistic method.

**4.** The apparatus (100) according to one of claims 1 to 3, wherein the generating unit (13, 121) is configured to evaluate each of the plurality of path candidates (40a-40f), and the screen (60A, 60B, 60D) includes an evaluation result of each of the plurality of path candidates (40a-40f).

**5.** The apparatus (100) according to claim 4, wherein the evaluation result presents at least one of moving distance, moving time, and degree of risk of collision with the object for each of the plurality of path candidates (40a-40f).

**6.** The apparatus (100) according to one of claims 1 to 5, wherein

the one or more operation sections includes first to Nth operation sections, the N being an integer greater than or equal to 2, the apparatus (100) further comprising a setting unit (12, 121) configured to set which one of a first group and a second group the first to the Nth operation sections each fall under,
the setting unit (12, 121) is configured to set one or more of the first to Nth operation sections that fall under the first group as the target operation section,
the deciding unit is configured to decide the operation path of the robot (200) for one or more of the first to Nth operation sections that fall under the second group based on teaching data designated, and
the deciding unit is configured to decide a path obtained by connecting the operation paths decided for the first to the Nth operation sections as an entire path from a start point of the first operation section to an ending point of the Nth operation section.

**7.** The apparatus (100) according to claim 6, further comprising a controller (15, 121) configured to operate the robot (200) along the entire path, wherein

the setting unit (12, 121) is configured to set which one of a third group and a fourth group the first to the Nth operation sections each fall under,
the controller (15, 121) is operable to control the robot (200) so as to perform a collision-avoidable operation that allows the robot (200) to avoid any collision with an object around the robot (200),
the controller (15, 121) is configured to activate the collision-avoidable operation when the robot (200) is in motion along the operation path corresponding to one or more of the first to the Nth operation sections that fall under the third group, and
the controller (15, 121) is configured to disable the collision-avoidable operation when the robot (200) is in motion along the operation path corresponding to one or more of the first to the Nth operation sections that fall under the fourth group.

**8.** The apparatus (100) according to claim 7, wherein

the collision-avoidable operation includes an operation that allows the robot (200) to move away from a dynamic object,
the controller (15, 121) is configured to evaluate a risk of collision between the robot (200) in motion and a static object around the robot (200), and
the controller (15, 121) is configured to stop the robot (200) in response to the risk being greater than a predefined second reference.

**9.** A method for generating an operation path of a robot (200) before the robot (200) starts to operate, the method comprising:

receiving designation of one or more operation sections;
generating a plurality of path candidates (40a-40f) of the robot (200) for a target operation section of the one or more operation sections;
displaying the plurality of path candidates (40a-40f) on a user interface (504);
receiving a selection of one of the plurality of path candidates (40a-40f); and
deciding the selected one of the plurality of path candidates (40a-40f) as the operation path of the target operation section.

**10.** A program that prompts a computer to execute a method for generating an operation path of a robot (200) before the robot (200) starts to operate, the method comprising:

receiving designation of one or more operation sections;

generating a plurality of path candidates (40a-40f) of the robot (200) for a target operation section of the one or more operation sections;
providing data for display of a screen (60A, 60B, 60D) on which a selection of one of the plurality of path candidates (40a-40f) is to be received; and
deciding the selected one of the plurality of path candidates (40a-40f) as the operation path of the target operation section.

FIG.1

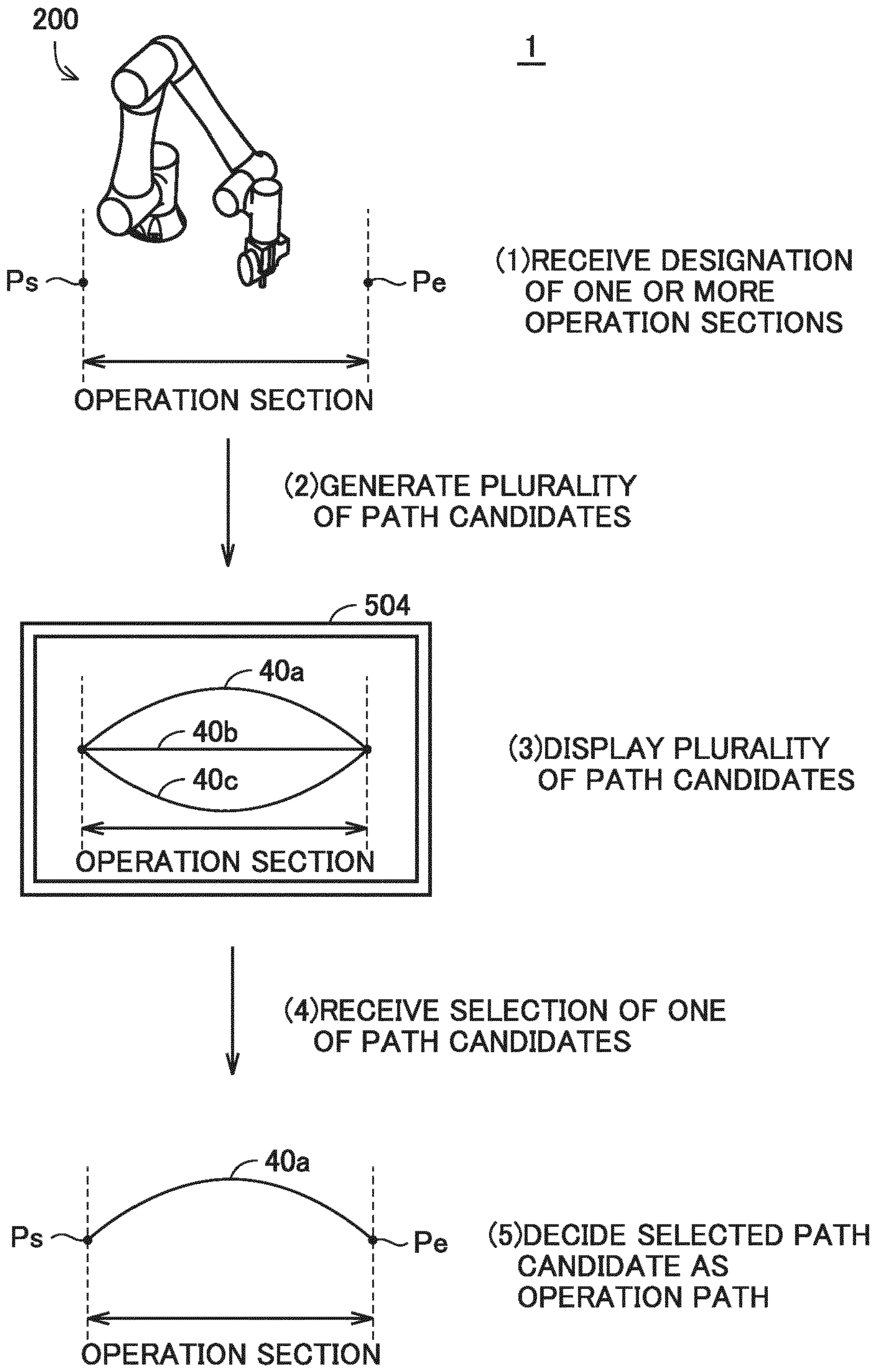
200
1
Ps
Pe
(1)RECEIVE DESIGNATION OF ONE OR MORE OPERATION SECTIONS
OPERATION SECTION
(2)GENERATE PLURALITY OF PATH CANDIDATES
504
40a
40b
40c
OPERATION SECTION
(3)DISPLAY PLURALITY OF PATH CANDIDATES
(4)RECEIVE SELECTION OF ONE OF PATH CANDIDATES
40a
Ps
Pe
(5)DECIDE SELECTED PATH CANDIDATE AS OPERATION PATH
OPERATION SECTION

FIG.2

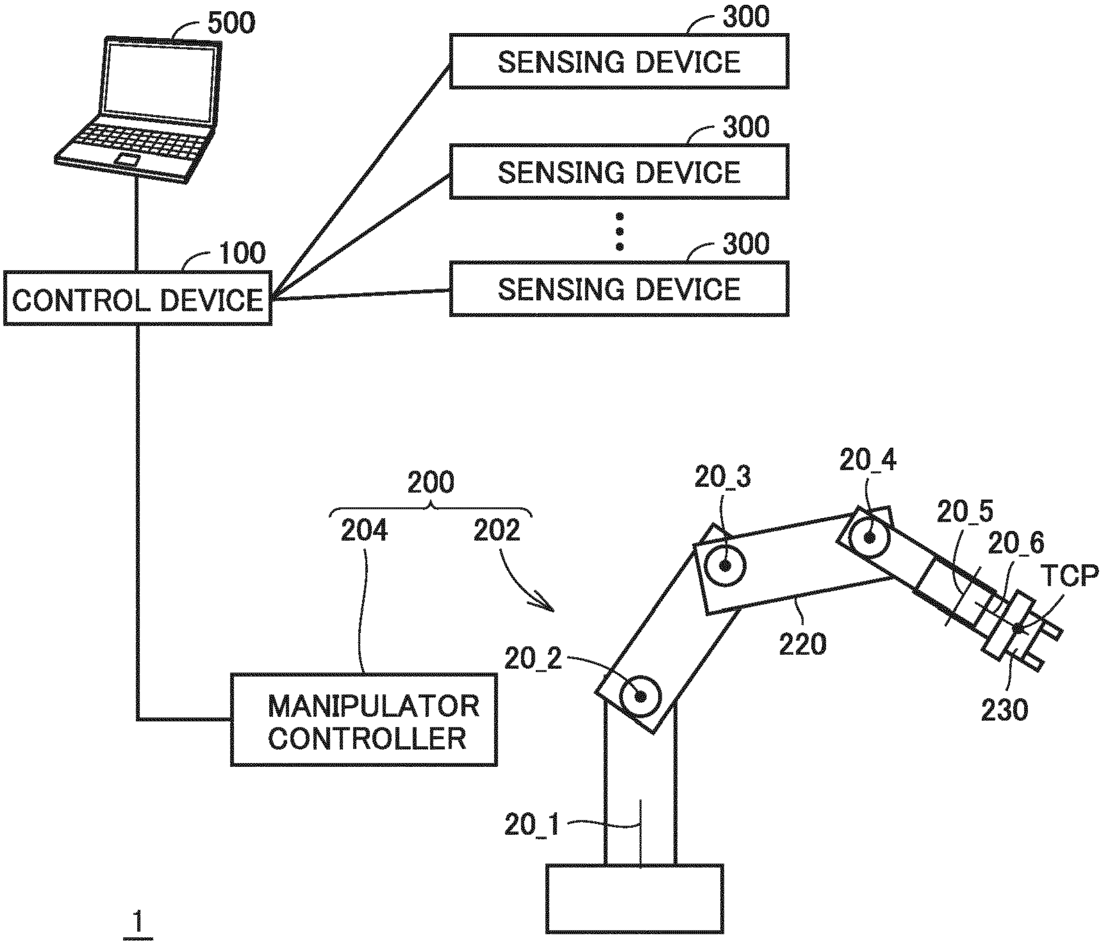
500
300
SENSING DEVICE
300
SENSING DEVICE
100
300
CONTROL DEVICE
SENSING DEVICE
200
204
202
20_3
20_4
20_5
20_6
TCP
220
20_2
230
MANIPULATOR CONTROLLER
20_1
1

FIG.3

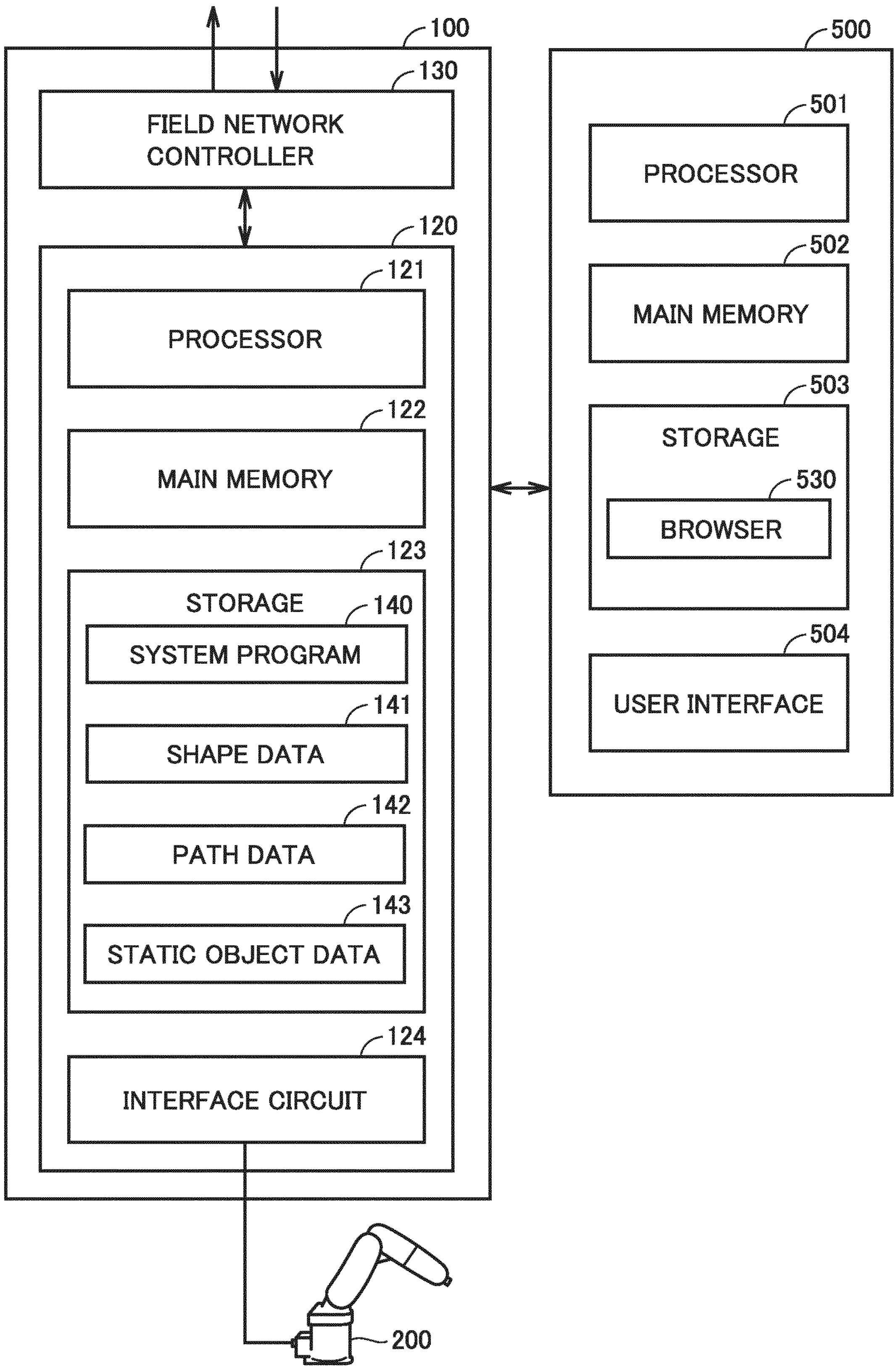
FIELD NETWORK
100
130
FIELD NETWORK CONTROLLER
120
121
PROCESSOR
122
MAIN MEMORY
123
STORAGE
140
SYSTEM PROGRAM
141
SHAPE DATA
142
PATH DATA
143
STATIC OBJECT DATA
124
INTERFACE CIRCUIT
200
500
501
PROCESSOR
502
MAIN MEMORY
503
STORAGE
530
BROWSER
504
USER INTERFACE

FIG.4

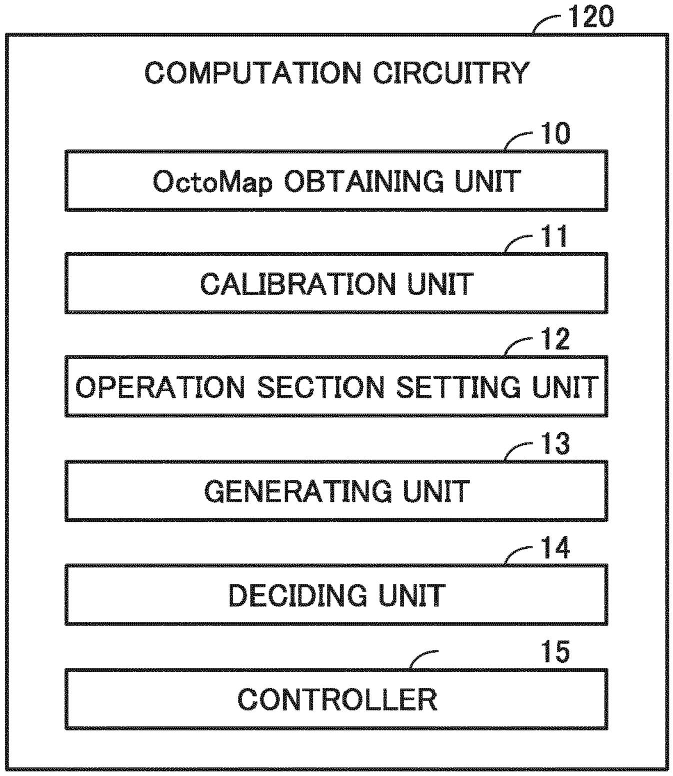
120
COMPUTATION CIRCUITRY
10
OctoMap OBTAINING UNIT
11
CALIBRATION UNIT
12
OPERATION SECTION SETTING UNIT
13
GENERATING UNIT
14
DECIDING UNIT
15
CONTROLLER

FIG.5

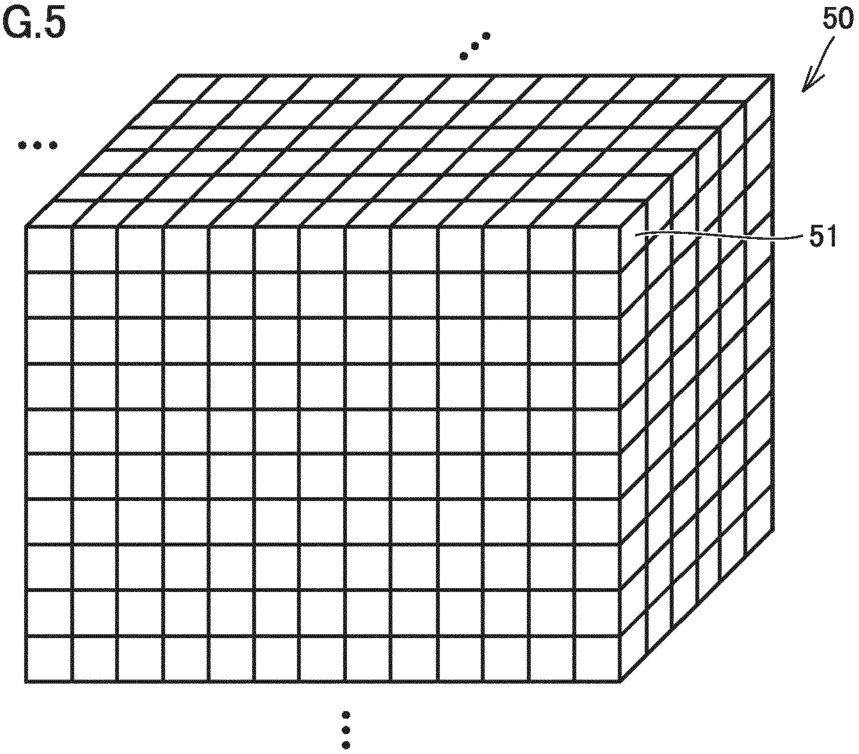
50
51

FIG.6

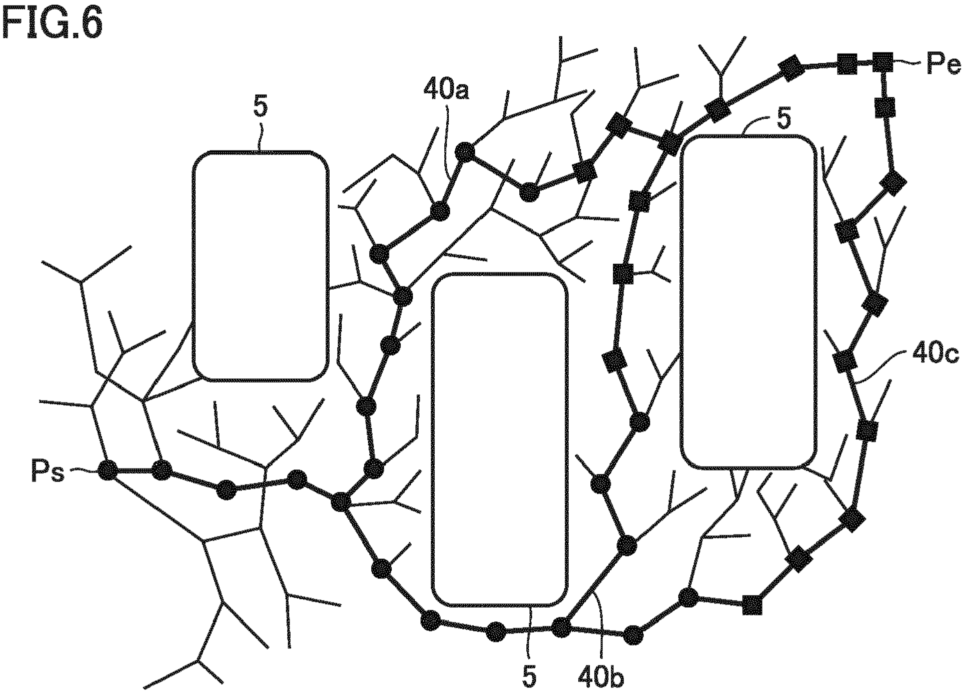

FIG.7

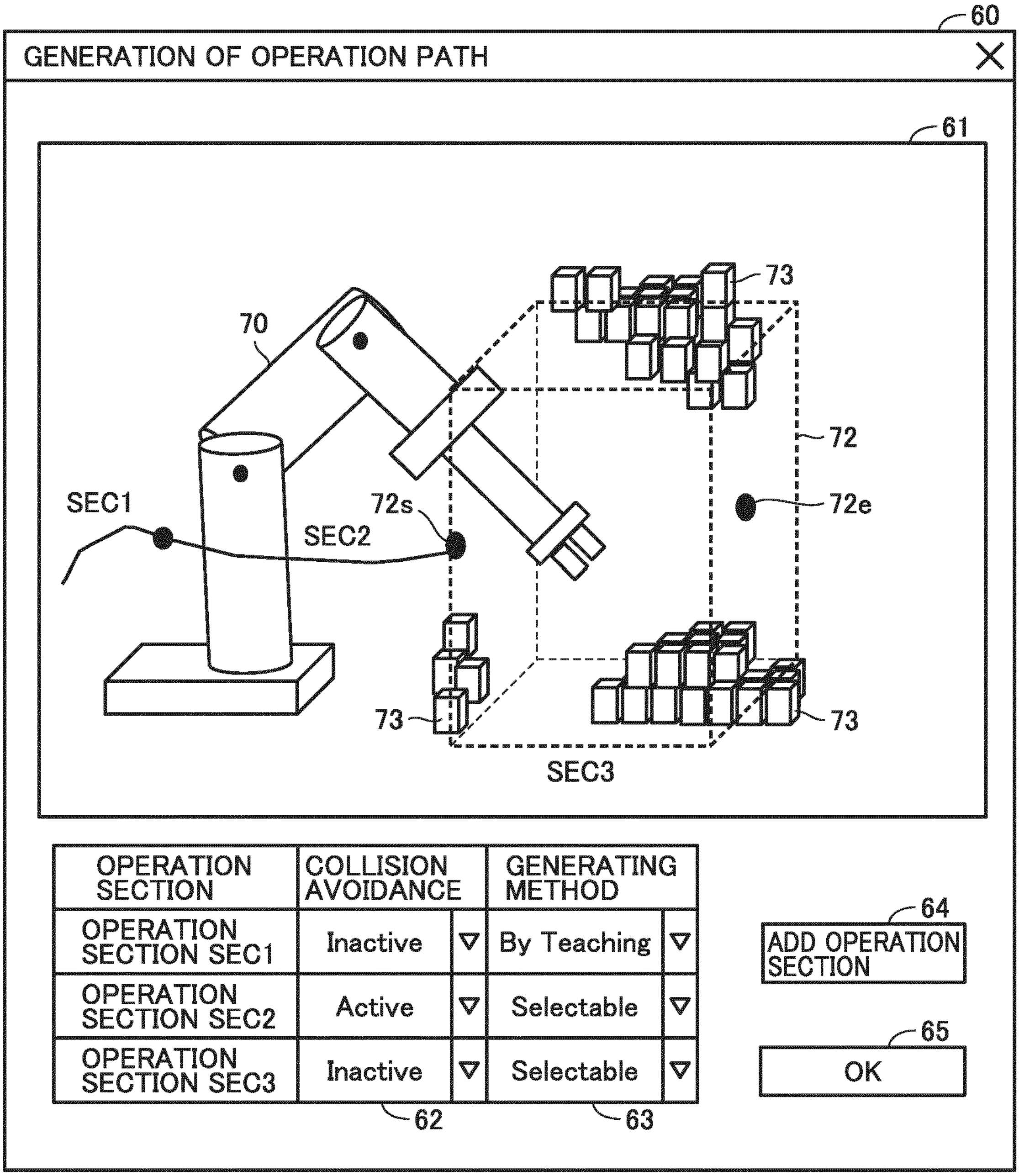
60
GENERATION OF OPERATION PATH
61
70
73
72
72e
SEC1
72s
SEC2
73
73
SEC3
OPERATION SECTION
COLLISION AVOIDANCE
GENERATING METHOD
OPERATION SECTION SEC1
Inactive
By Teaching
OPERATION SECTION SEC2
Active
Selectable
OPERATION SECTION SEC3
Inactive
Selectable
62
63
64
ADD OPERATION SECTION
65
OK

FIG.8

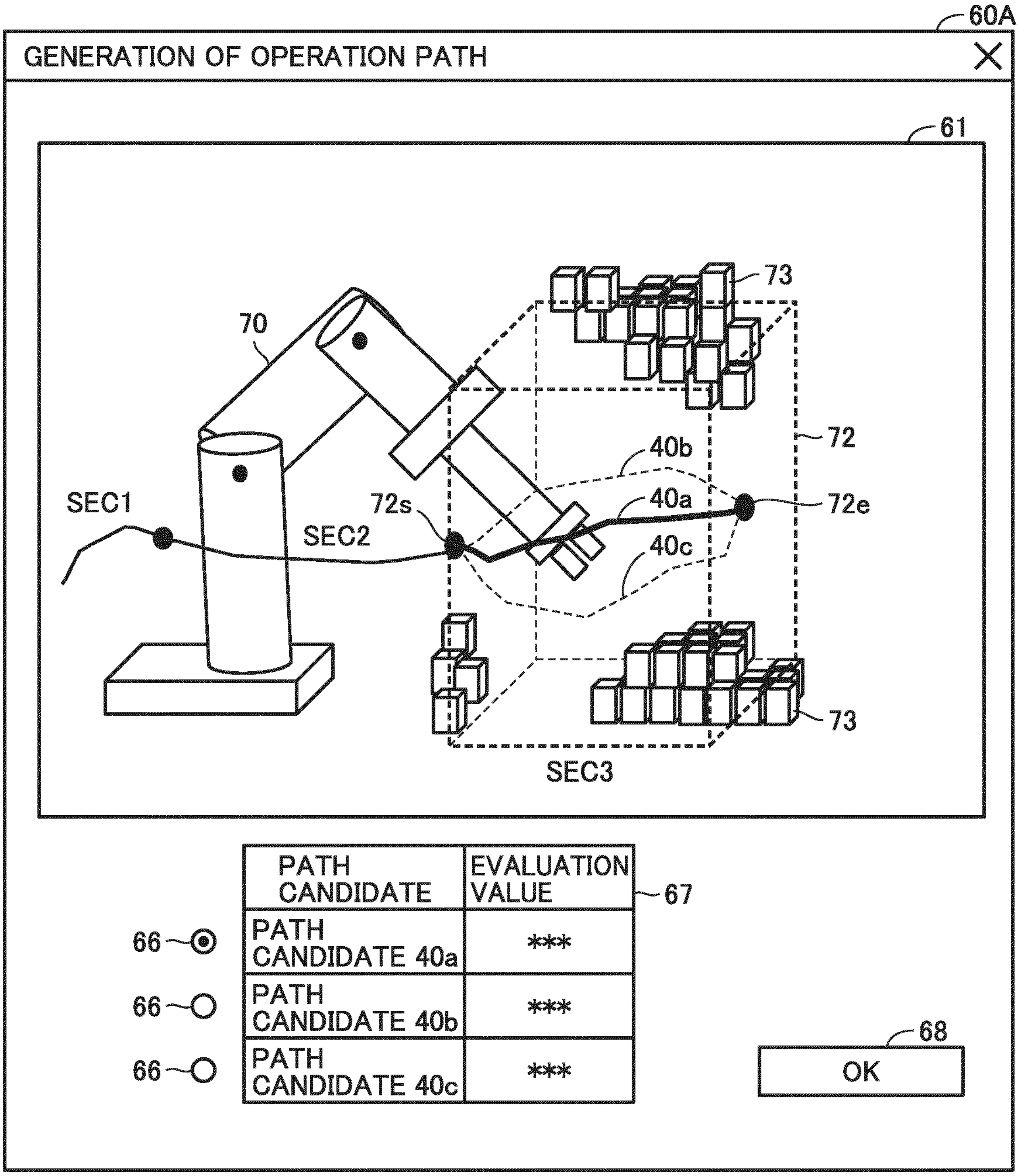
60A
GENERATION OF OPERATION PATH
61
70
73
72
40b
40a
40c
SEC1
SEC2
72s
72e
73
SEC3
PATH CANDIDATE
EVALUATION VALUE
67
66
PATH CANDIDATE 40a
***
66
PATH CANDIDATE 40b
***
66
PATH CANDIDATE 40c
***
68
OK

FIG.9

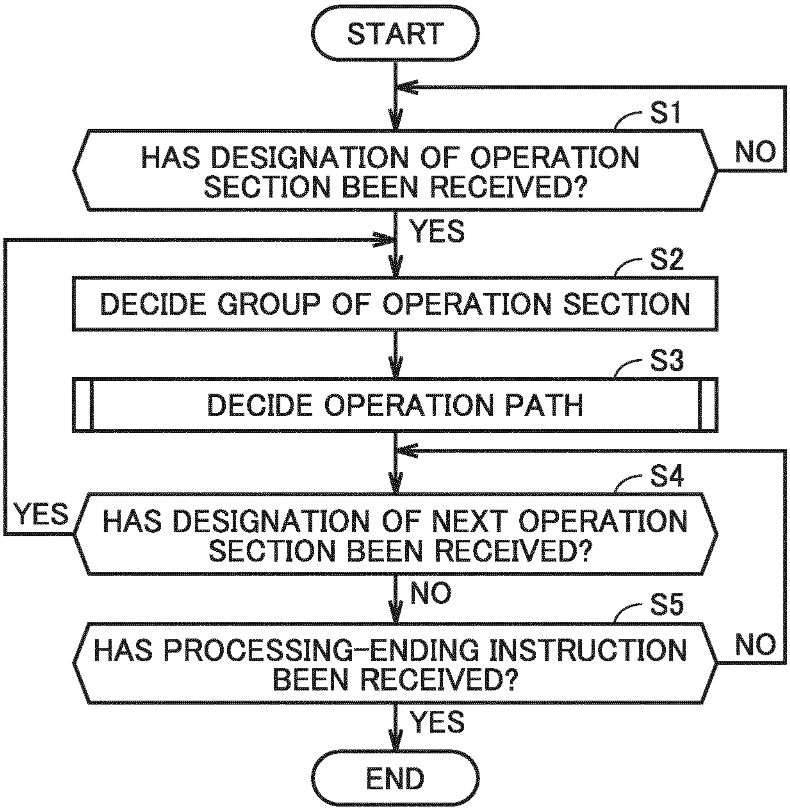
START
S1
HAS DESIGNATION OF OPERATION SECTION BEEN RECEIVED?
NO
YES
S2
DECIDE GROUP OF OPERATION SECTION
S3
DECIDE OPERATION PATH
S4
YES
HAS DESIGNATION OF NEXT OPERATION SECTION BEEN RECEIVED?
NO
S5
HAS PROCESSING-ENDING INSTRUCTION BEEN RECEIVED?
NO
YES
END

FIG.10

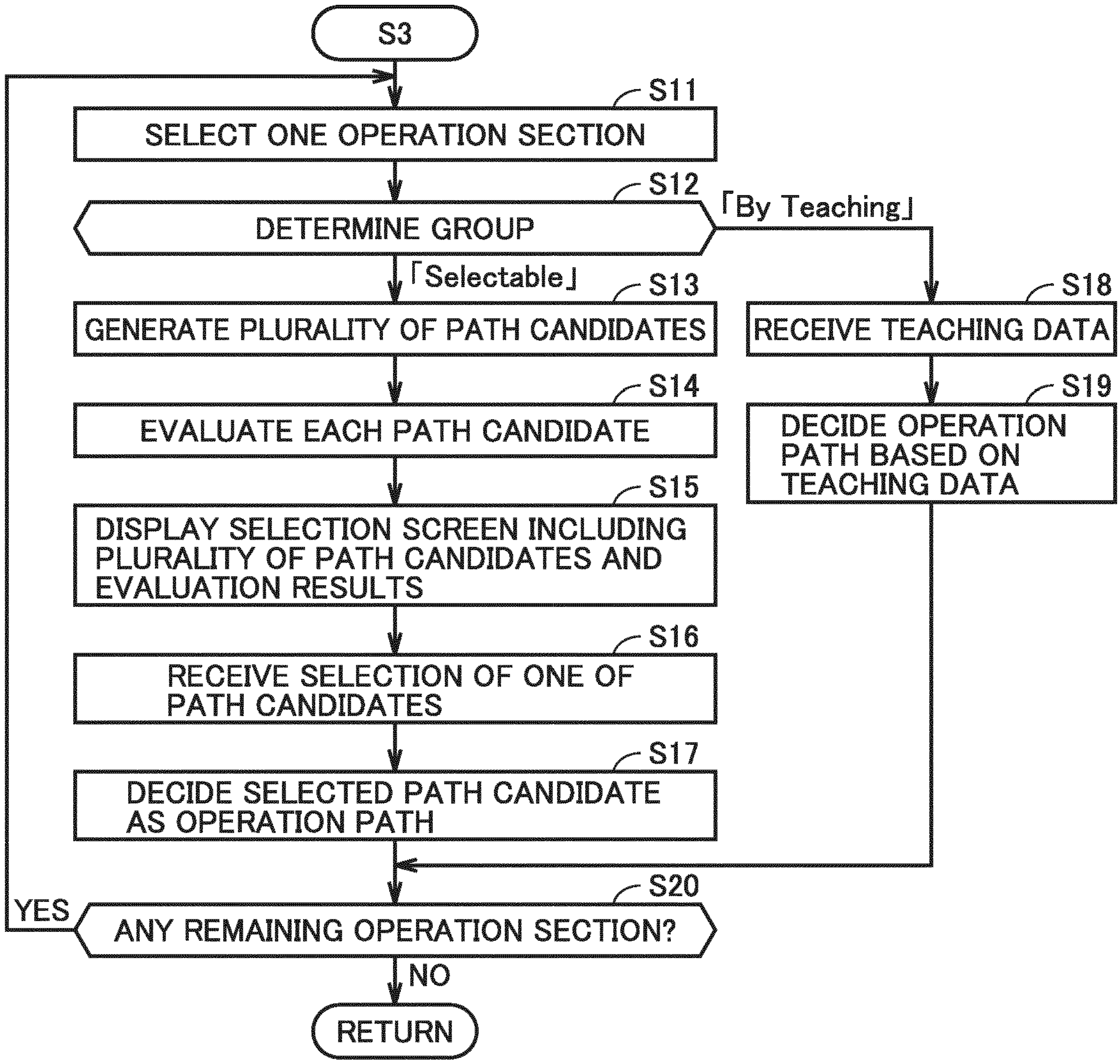
S3
S11
SELECT ONE OPERATION SECTION
S12
DETERMINE GROUP
「By Teaching」
「Selectable」
S13
GENERATE PLURALITY OF PATH CANDIDATES
S18
RECEIVE TEACHING DATA
S14
EVALUATE EACH PATH CANDIDATE
S19
DECIDE OPERATION PATH BASED ON TEACHING DATA
S15
DISPLAY SELECTION SCREEN INCLUDING PLURALITY OF PATH CANDIDATES AND EVALUATION RESULTS
S16
RECEIVE SELECTION OF ONE OF PATH CANDIDATES
S17
DECIDE SELECTED PATH CANDIDATE AS OPERATION PATH
S20
YES
ANY REMAINING OPERATION SECTION?
NO
RETURN

FIG.11

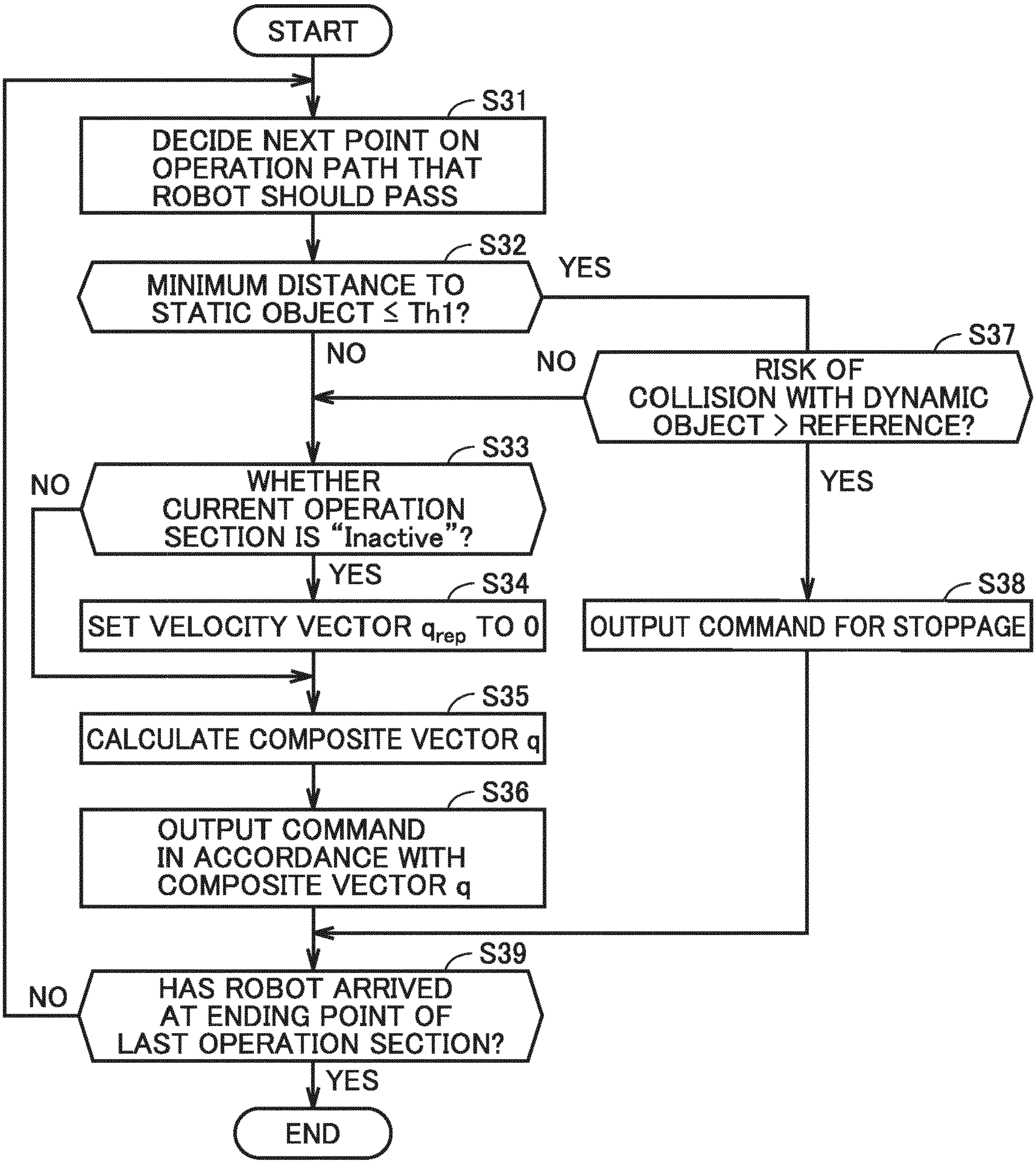
START
S31
DECIDE NEXT POINT ON OPERATION PATH THAT ROBOT SHOULD PASS
S32
MINIMUM DISTANCE TO STATIC OBJECT ≤ Th1?
YES
NO
S37
RISK OF COLLISION WITH DYNAMIC OBJECT > REFERENCE?
NO
YES
S33
WHETHER CURRENT OPERATION SECTION IS "Inactive"?
NO
YES
S34
SET VELOCITY VECTOR $q_{rep}$ TO 0
S38
OUTPUT COMMAND FOR STOPPAGE
S35
CALCULATE COMPOSITE VECTOR q
S36
OUTPUT COMMAND IN ACCORDANCE WITH COMPOSITE VECTOR q
S39
HAS ROBOT ARRIVED AT ENDING POINT OF LAST OPERATION SECTION?
NO
YES
END

FIG.12

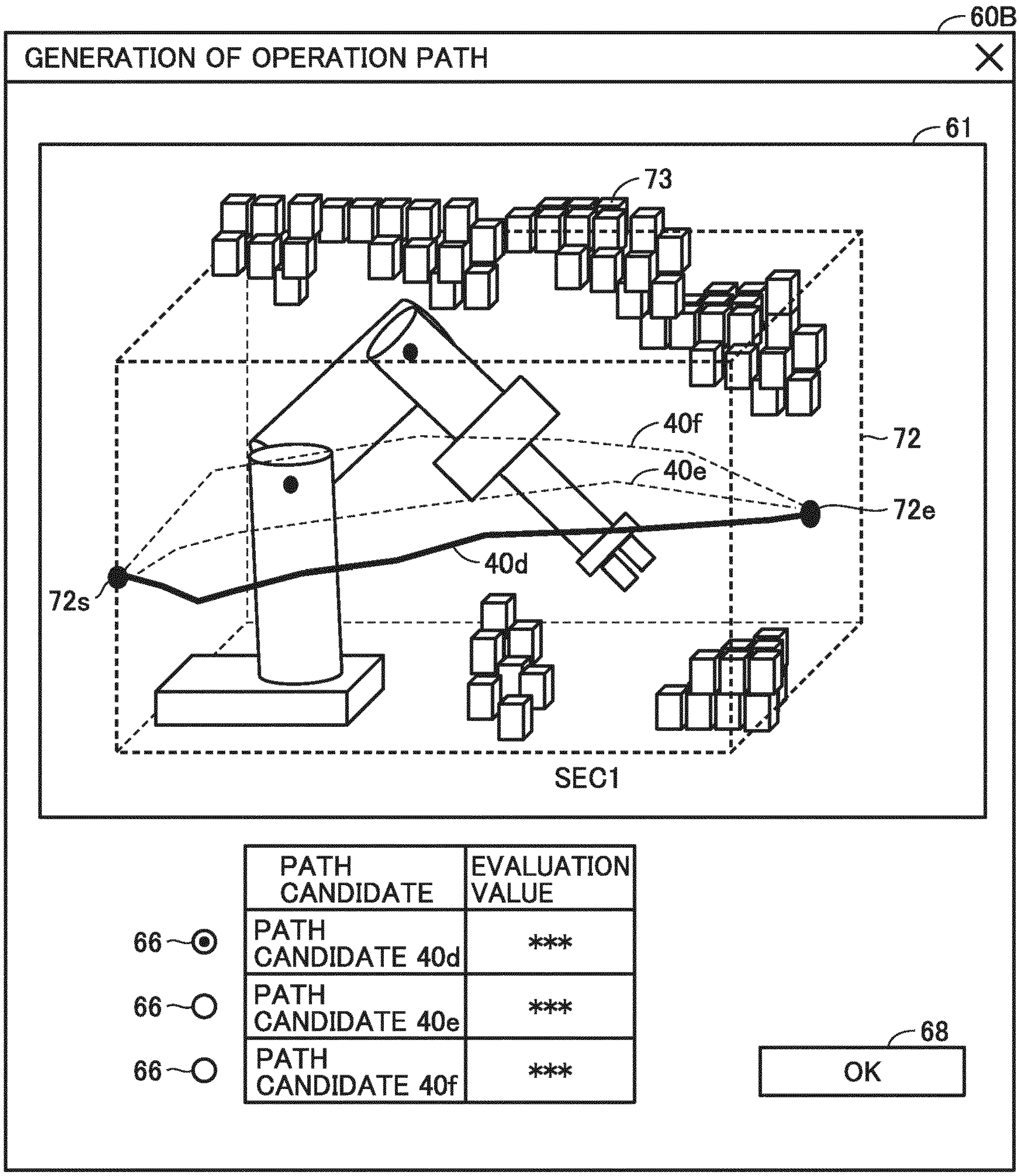
60B
GENERATION OF OPERATION PATH
61
73
40f
72
40e
72e
40d
72s
SEC1
PATH CANDIDATE
EVALUATION VALUE
66
PATH CANDIDATE 40d
***
66
PATH CANDIDATE 40e
***
66
PATH CANDIDATE 40f
***
68
OK

FIG.13

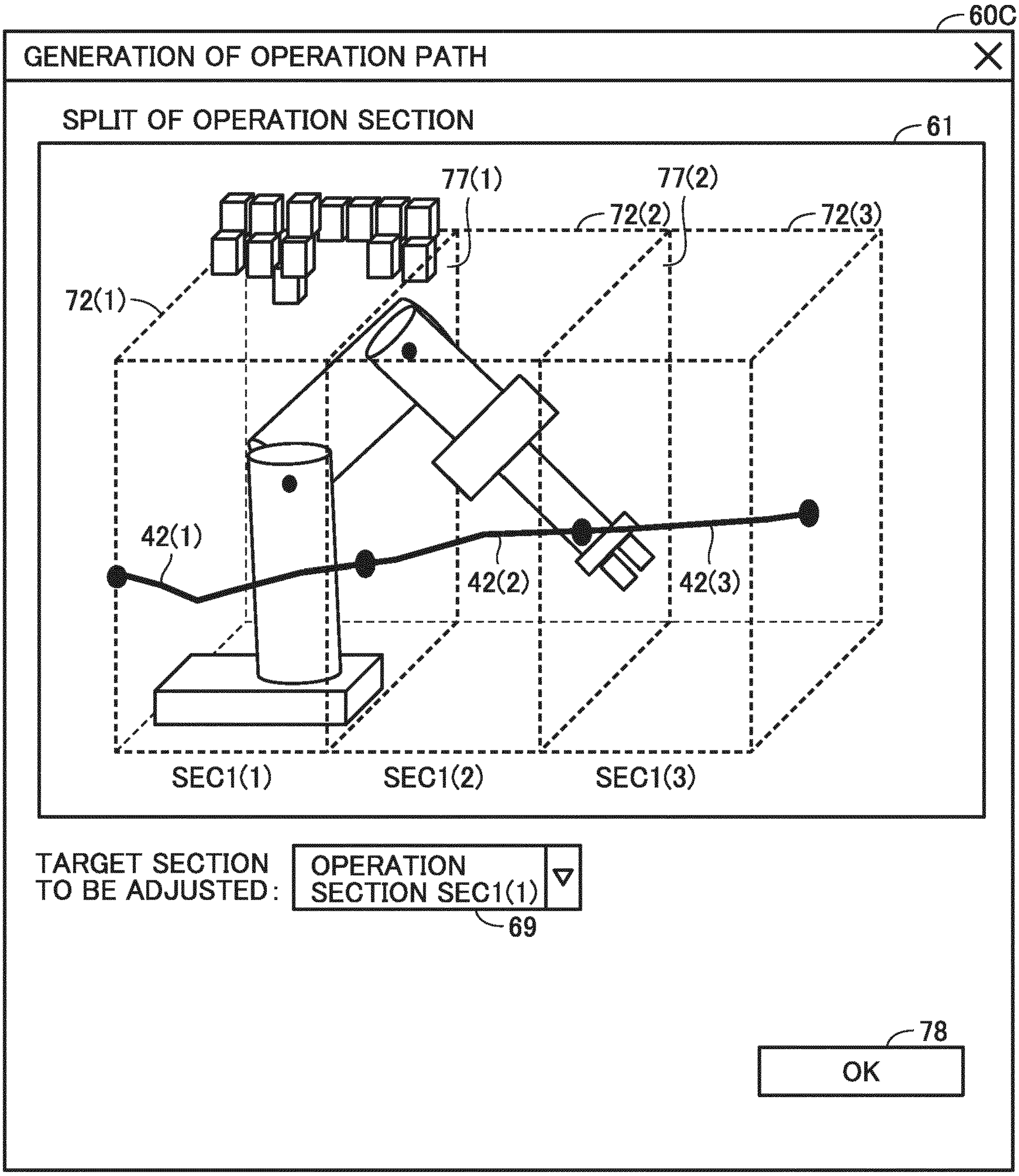
60C
GENERATION OF OPERATION PATH
SPLIT OF OPERATION SECTION
61
77(1)
77(2)
72(2)
72(3)
72(1)
42(1)
42(2)
42(3)
SEC1(1)
SEC1(2)
SEC1(3)
TARGET SECTION TO BE ADJUSTED:
OPERATION SECTION SEC1(1)
69
78
OK

FIG.14

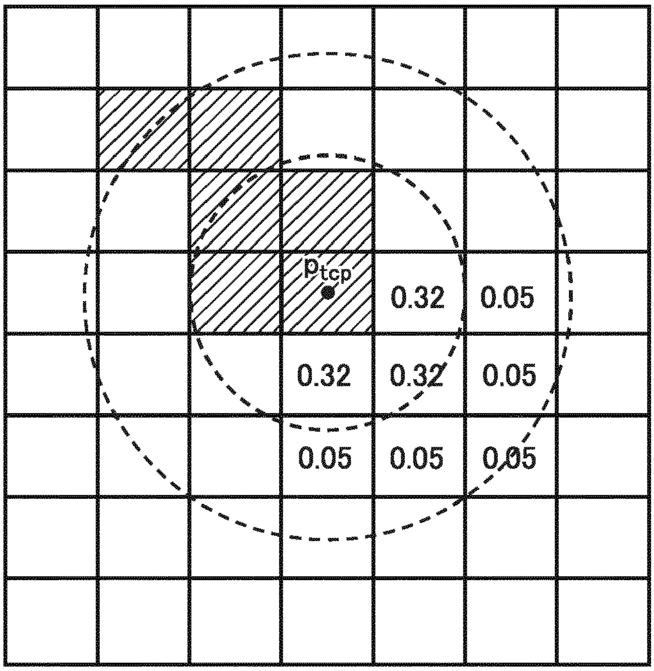

FIG.15

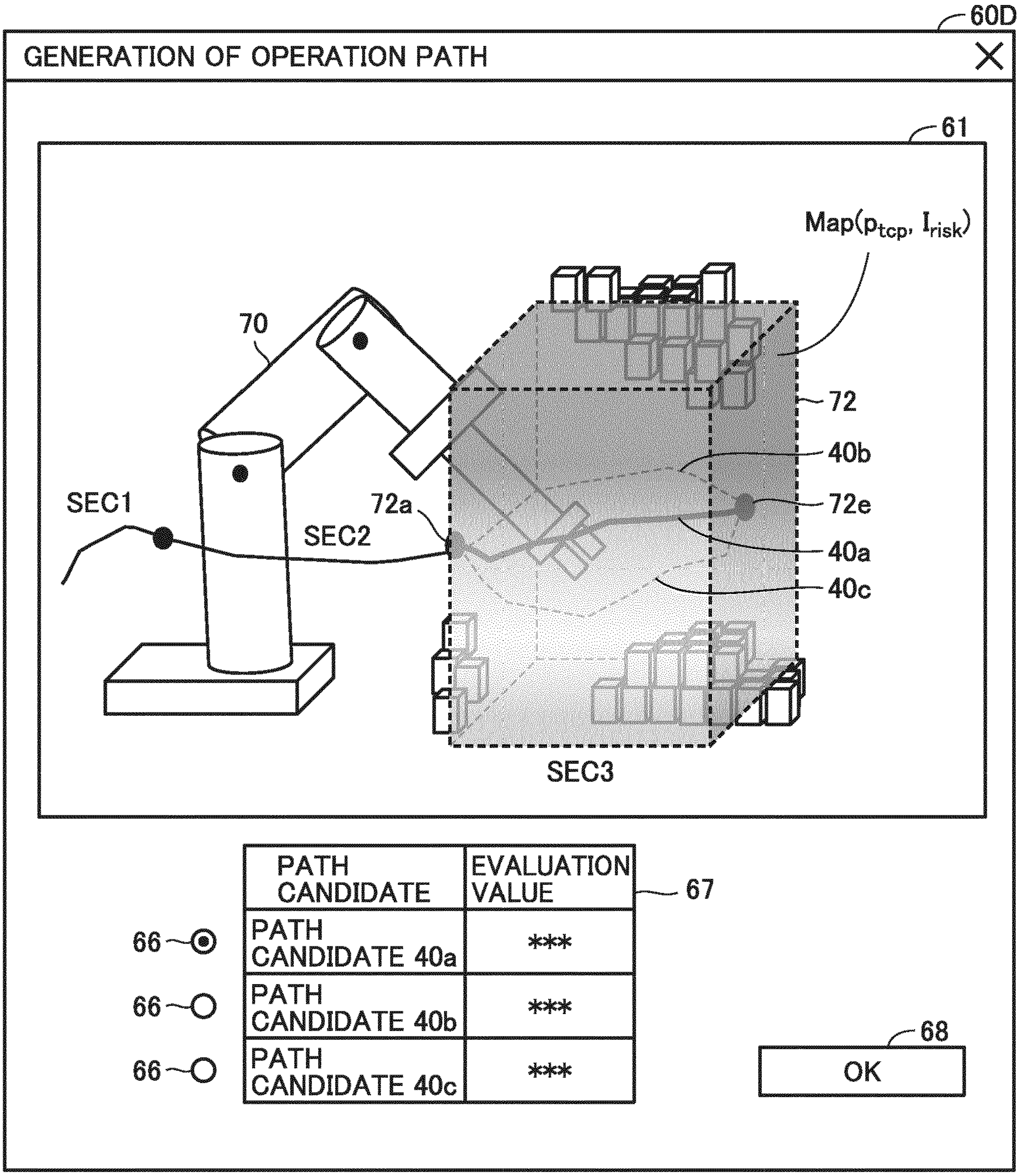
60D
GENERATION OF OPERATION PATH
61
Map($p_{tcp}$, $I_{risk}$)
70
72
40b
72e
40a
40c
SEC1
72a
SEC2
SEC3
PATH CANDIDATE
EVALUATION VALUE
67
66
PATH CANDIDATE 40a
***
66
PATH CANDIDATE 40b
***
66
PATH CANDIDATE 40c
***
68
OK

Europäisches Patentamt
European Patent Office
Office européen des brevets

# EUROPEAN SEARCH REPORT

Application Number
EP 23 18 8373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/134559 A1 (LI XI [CN] ET AL) 5 May 2022 (2022-05-05) | 1-5,9,10 | INV. B25J9/16 |
| A | * paragraph [0067] - paragraph [0222] * ----- | 6-8 | |
| X | US 2021/200219 A1 (GASCHLER ANDRE [DE]) 1 July 2021 (2021-07-01) | 1-5,9,10 | |
| A | * paragraph [0017] - paragraph [0128] * ----- | 6-8 | |
| X | WO 2022/119934 A1 (REALTIME ROBOTICS INC [US]) 9 June 2022 (2022-06-09) | 1-5,9,10 | |
| A | * page 15, line 29 - page 38, line 15 * ----- | 6-8 | |
| X | US 2022/063099 A1 (LIN HSIEN-CHUNG [US] ET AL) 3 March 2022 (2022-03-03) | 1-5,9,10 | |
| A | * paragraph [0016] - paragraph [0063] * ----- | 6-8 | |
| X | US 2020/198140 A1 (DUPUIS JEAN-FRANCOIS [US] ET AL) 25 June 2020 (2020-06-25) | 1-5,9,10 | |
| A | * paragraph [0025] - paragraph [0083] * ----- | 6-8 | |

TECHNICAL FIELDS SEARCHED (IPC)

B25J
G05B

The present search report has been drawn up for all claims

1

| Place of search | Date of completion of the search | Examiner |
|---|---|---|
| The Hague | 11 January 2024 | Cîrîc, George |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 18 8373

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2024

| Patent document cited in search report | Publication date | Patent family member(s) | Publication date |
|---|---|---|---|
| US 2022134559 A1 | 05-05-2022 | CN 111504328 A | 07-08-2020 |
| | | CN 114061580 A | 18-02-2022 |
| | | EP 4155675 A1 | 29-03-2023 |
| | | JP 2022543115 A | 07-10-2022 |
| | | KR 20220025887 A | 03-03-2022 |
| | | US 2022134559 A1 | 05-05-2022 |
| | | WO 2021232669 A1 | 25-11-2021 |
| US 2021200219 A1 | 01-07-2021 | US 2021197377 A1 | 01-07-2021 |
| | | US 2021200219 A1 | 01-07-2021 |
| WO 2022119934 A1 | 09-06-2022 | CN 116472146 A | 21-07-2023 |
| | | EP 4221945 A1 | 09-08-2023 |
| | | JP 2023551681 A | 12-12-2023 |
| | | TW 202316221 A | 16-04-2023 |
| | | US 2024009845 A1 | 11-01-2024 |
| | | WO 2022119934 A1 | 09-06-2022 |
| US 2022063099 A1 | 03-03-2022 | CN 114137951 A | 04-03-2022 |
| | | DE 102021120633 A1 | 03-03-2022 |
| | | JP 2022042972 A | 15-03-2022 |
| | | US 2022063099 A1 | 03-03-2022 |
| US 2020198140 A1 | 25-06-2020 | BR 112021006276 A2 | 06-07-2021 |
| | | CA 3113669 A1 | 25-06-2020 |
| | | CN 112823084 A | 18-05-2021 |
| | | EP 3843955 A1 | 07-07-2021 |
| | | JP 7219811 B2 | 08-02-2023 |
| | | JP 2022511322 A | 31-01-2022 |
| | | KR 20210053323 A | 11-05-2021 |
| | | US 2020198140 A1 | 25-06-2020 |
| | | WO 2020132386 A1 | 25-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022138314 A


### Non-patent literature cited in the description


- On-line collision avoidance for collaborative robot manipulators by adjusting off-line generated paths: An industrial use case. **MOHAMMAD SAFEEA.** Robotics and Autonomous Systems. Elsevier, 2019, vol. 119, 278-288
- **JUSTINAS MISEIKIS.** Multi 3D camera mapping for predictive and reflexive robot manipulator trajectory estimation. *2016 IEEE Symposium Series on Computational Intelligence (SSCI)*